(19) 

**Europäisches Patentamt**

**European Patent Office**

**Office européen des brevets**

(11) **EP 4 629 626 A1**

(12) **EUROPEAN PATENT APPLICATION**

(43) Date of publication:
08.10.2025 Bulletin 2025/41

(21) Application number: 24305518.3

(22) Date of filing: 03.04.2024

(51) International Patent Classification (IPC):
*H04N 19/117* (2014.01)     *H04N 19/52* (2014.01)
*H04N 19/82* (2014.01)

(52) Cooperative Patent Classification (CPC):
**H04N 19/52; H04N 19/117; H04N 19/82**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **InterDigital CE Patent Holdings, SAS
75017 Paris (FR)**

(72) Inventors:
• **LE LEANNEC, Fabrice
35830 BETTON (FR)**
• **BORDES, Philippe
35890 LAILLE (FR)**
• **ROBERT, Antoine
35140 MEZIERES SUR COUESNON (FR)**
• **LE GUYADEC, Pascal
35760 SAINT GREGOIRE (FR)**

(74) Representative: **Rittner, Karsten
Rittner & Partner
Patentanwälte mbB
Schiffgraben 17
30159 Hannover (DE)**

(54) **IMPROVEMENTS FOR TEMPORAL FILTERING**

(57)    In one implementation, we propose several methods to improve temporal filtering in the inter prediction process. In one aspect, an adaptive top-only, left-only or top-left template area is selected to compute temporal prediction enhancement parameters for reference sample filtering. Further, explicit signaling of the RFIP flag is used for the temporal filtering method. In addition, a non-local approach is adapted to the case of reference convolutional filtering. Moreover, RFIP filtering parameters can be inherited in addition to motion and LIC information, in the merge mechanism.

FIG. 34

EP 4 629 626 A1

**Description**

TECHNICAL FIELD

The present embodiments generally relate to a method and an apparatus for inter prediction in video encoding and decoding.

BACKGROUND

To achieve high compression efficiency, image and video coding schemes usually employ prediction and transform to leverage spatial and temporal redundancy in the video content. Generally, intra or inter prediction is used to exploit the intra or inter picture correlation, then the differences between the original block and the predicted block, often denoted as prediction errors or prediction residuals, are transformed, quantized, and entropy coded. To reconstruct the video, the compressed data are decoded by inverse processes corresponding to the entropy coding, quantization, transform, and prediction.

SUMMARY

According to an embodiment, a method of video decoding is presented, comprising: obtaining a reference block in a reference picture for a block in a picture, wherein said block is decoded in a merge mode, and wherein a non-adjacent neighboring block is included as a candidate in a merge candidate list for said block; obtaining one or more filter parameters for reference convolutional filtering for said block based on said merge candidate list; applying said one or more filter parameters to said reference block; obtaining a prediction block for said block based on said filtered reference block; and decoding said block based on said prediction block for said block.

According to another embodiment, a method of video encoding is presented, comprising: obtaining a reference block in a reference picture for a block in a picture, wherein said block is encoded in a merge mode, and wherein a non-adjacent neighboring block is included as a candidate in a merge candidate list for said block; obtaining one or more filter parameters for reference convolutional filtering for said block based on said merge candidate list; applying said one or more filter parameters to said reference block based on said merge candidate list; obtaining a prediction block for said block based on said filtered reference block; and encoding said block based on said prediction block for said block.

According to another embodiment, an apparatus for video decoding is presented, comprising one or more processors and at least one memory coupled to said one or more processors, wherein said one or more processors are configured to: obtaining a reference block in a reference picture for a block in a picture, wherein said block is decoded in a merge mode, and wherein a non-adjacent neighboring block is included as a candidate in a merge candidate list for said block; obtain one or more filter parameters for reference convolutional filtering for said block based on said merge candidate list; apply said one or more filter parameters to said reference block; obtain a prediction block for said block based on said filtered reference block; and decode said block based on said prediction block for said block.

According to another embodiment, an apparatus for video encoding is presented, comprising one or more processors and at least one memory coupled to said one or more processors, wherein said one or more processors are configured to: obtain a reference block in a reference picture for a block in a picture, wherein said block is encoded in a merge mode, and wherein a non-adjacent neighboring block is included as a candidate in a merge candidate list for said block; obtain one or more filter parameters for reference convolutional filtering for said block based on said merge candidate list; apply said one or more filter parameters to said reference block; obtain a prediction block for said block based on said filtered reference block; and encode said block based on said prediction block for said block.

According to another embodiment, a method of video decoding is presented, comprising: obtaining a reference block in a reference picture for a block in a picture; obtaining a first template based on decoded samples in said picture; obtaining a second template based on decoded samples in said reference picture; determining that reference convolutional filtering is used for inter prediction for said block, responsive to that local illumination compensation is off for said block; obtaining one or more filter parameters for reference convolutional filtering based on said first template and said second template; applying said one or more filter parameters to said reference block; obtaining a prediction block for said block based on said filtered reference block; and decoding said block based on said prediction block for said block.

According to another embodiment, a method of video encoding is presented, comprising: obtaining a reference block in a reference picture for a block in a picture; obtaining a first template based on reconstructed samples in said picture; obtaining a second template based on reconstructed samples in said reference picture; determining that reference convolutional filtering is used for inter prediction for said block, responsive to that local illumination compensation is off for said block; obtaining one or more filter parameters for reference convolutional filtering based on said first template and said second template; applying said one or more filter parameters to said reference block; obtaining a prediction block for said block based on said filtered reference block; and encoding said block based on said prediction block for said block.

According to another embodiment, an apparatus for video decoding, comprising one or more processors and at least one memory coupled to said one or more processors, wherein said one or more processors are configured to: obtain a reference block in a reference picture for a block in a picture; obtain a first template based on decoded samples in said picture; obtain a second template based on decoded samples in said reference picture; determine that reference convolutional filtering is used for inter prediction for said block, responsive to that local illumination compensation is off for said block; obtain one or more filter parameters for reference convolutional filtering based on said first template and said second template; apply said one or more filter parameters to said reference block; obtain a prediction block for said block based on said filtered reference block; and decode said block based on said prediction block for said block.

According to another embodiment, an apparatus for video encoding is presented, comprising one or more processors and at least one memory coupled to said one or more processors, wherein said one or more processors are configured to: obtain a reference block in a reference picture for a block in a picture; obtain a first template based on reconstructed samples in said picture; obtain a second template based on reconstructed samples in said reference picture; determine that reference convolutional filtering is used for inter prediction for said block, responsive to that local illumination compensation is off for said block; obtain one or more filter parameters for reference convolutional filtering based on said first template and said second template; apply said one or more filter parameters to said reference block; obtain a prediction block for said block based on said filtered reference block; and encode said block based on said prediction block for said block.

According to another embodiment, a method of video decoding is presented, comprising: obtaining a reference block in a reference picture for a block in a picture; determining an area for a first template, wherein said first template is one of a first area containing only samples on top of said block, a second area containing only samples to the left of said block, and a third area containing samples on top of said block and samples to the left of said block; obtaining said area for said first template based on decoded samples in said picture; obtaining a second template based on decoded samples in said reference picture; obtaining one or more filter parameters based on said first template and said second template; applying said one or more filter parameters to said reference block; obtaining a prediction block for said block based on said filtered reference block; and decoding said block based on said prediction block for said block.

According to another embodiment, a method of video encoding is presented, comprising: obtaining a reference block in a reference picture for a block in a picture; determining an area for a first template, wherein said first template is one of a first area containing only samples on top of said block, a second area containing only samples to the left of said block, and a third area containing samples on top of said block and samples to the left of said block; obtaining said area for said first template based on decoded samples in said picture; obtaining a second template based on decoded samples in said reference picture; obtaining one or more filter parameters based on said first template and said second template; applying said one or more filter parameters to said reference block; obtaining a prediction block for said block based on said filtered reference block; and encoding said block based on said prediction block for said block.

According to an embodiment, an apparatus for video decoding is presented, comprising one or more processors and at least one memory coupled to said one or more processors, wherein said one or more processors are configured to: obtain a reference block in a reference picture for a block in a picture; determine an area for a first template, wherein said first template is one of a first area containing only samples on top of said block, a second area containing only samples to the left of said block, and a third area containing samples on top of said block and samples to the left of said block; obtaining said area for said first template based on decoded samples in said picture; obtain a second template based on decoded samples in said reference picture; obtain one or more filter parameters based on said first template and said second template; apply said one or more filter parameters to said reference block; obtain a prediction block for said block based on said filtered reference block; and decode said block based on said prediction block for said block.

According to an embodiment, an apparatus for video encoding is presented, comprising one or more processors and at least one memory coupled to said one or more processors, wherein said one or more processors are configured to: obtain a reference block in a reference picture for a block in a picture; determine an area for a first template, wherein said first template is one of a first area containing only samples on top of said block, a second area containing only samples to the left of said block, and a third area containing samples on top of said block and samples to the left of said block; obtaining said area for said first template based on decoded samples in said picture; obtain a second template based on decoded samples in said reference picture; obtain one or more filter parameters based on said first template and said second template; apply said one or more filter parameters to said reference block; obtain a prediction block for said block based on said filtered reference block; and encode said block based on said prediction block for said block.

The selection of said first template can depend on a size of said block. The determination of determine said area for said first template can be based on signaling, for example, when a LIC (Local Illumination Compensation) flag is false and a RFIP (Reference Filtering for Inter Prediction) is true.

One or more embodiments also provide a computer program comprising instructions which when executed by one or more processors cause the one or more processors to perform the method according to any of the embodiments described herein. One or more of the present embodiments also provide a computer readable storage medium having stored thereon instructions for processing video data according to the methods described herein.

One or more embodiments also provide a computer readable storage medium having stored thereon video data generated according to the methods described above. One or more embodiments also provide a method and apparatus for transmitting or receiving the video data generated according to the methods described herein.

BRIEF DESCRIPTION OF THE DRAWINGS

FIG. 1 illustrates a block diagram of a system within which aspects of the present embodiments may be implemented.

FIG. 2 illustrates a block diagram of an embodiment of a video encoder.

FIG. 3 illustrates a block diagram of an embodiment of a video decoder.

FIG. 4 illustrates Coding Tree Unit, Coding Unit and Prediction Unit structures to represent a compressed HEVC picture.

FIG. 5 illustrates Coding Tree Unit, Prediction Unit and Transform Unit in HEVC standard.

FIG. 6 illustrates partitioning of Coding Units into Prediction Units.

FIG. 7 illustrates an example of a CTU division by a coding tree according to the VVC video standard.

FIG. 8 illustrates split modes supported in the multi-type tree partitioning of VVC.

FIG. 9 illustrates signaling of the inter prediction information according to the HEVC specification.

FIG. 10 illustrates the MVP candidate list construction in AMVP mode of HEVC.

FIG. 11 illustrates neighboring spatial locations A0, A1 (left) B0, B1, B2 (above) and collocated blocks for TMVP (H and C) of a current block.

FIG. 12 illustrates positions of spatial and temporal motion vector predictors used in the merge mode in HEVC.

FIG. 13 illustrates construction of the list of merge motion vector predictor candidates in HEVC.

FIG. 14 illustrates construction of the list of merge motion vector predictor candidates in HEVC.

FIG. 15 illustrates the whole-block and sub-block-based motion representation categories.

FIG. 16 illustrates non-sub-block merge candidate list construction according to the VVC standard.

FIG. 17 illustrates allowed motion vector differences (MVd).

FIG. 18 illustrates representation of a CU motion data in GPM mode.

FIG. 19 illustrates an examples of GPM splits grouped by identical angles.

FIG. 20 illustrates an example of blending between two predicted partitions performed in GPM.

FIG. 21 illustrates control point based affine motion models supported by VVC for the 4-parameter affine mode.

FIG. 22 illustrates control point based affine motion models supported by VVC for the 6-parameter affine model.

FIG. 23 illustrates affine motion field representation on a 4x4 subblock basis.

FIG.24 illustrates control point motion vector inheritance.

FIG. 25 illustrates locations of candidate positions for a constructed affine merge mode.

FIG. 26 illustrates spatial neighbouring and non-adjacent block locations used to derive the spatial merge candidates.

FIG. 27 illustrates template matching performed on a search area around initial MV.

FIG. 28 illustrates the bilateral matching principle.

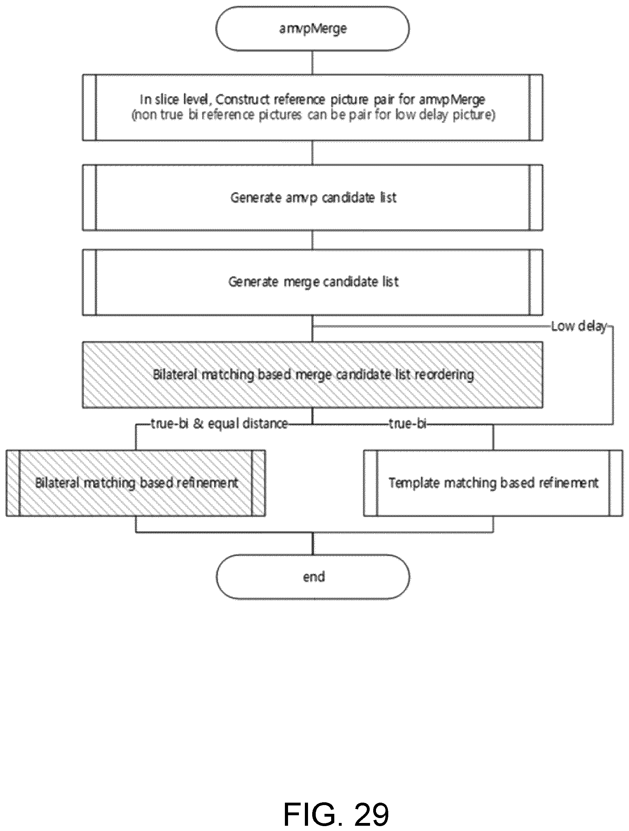

FIG. 29 illustrates AMVP-merge enabling for bi-predicted block with both reference pictures in the past or in the future.

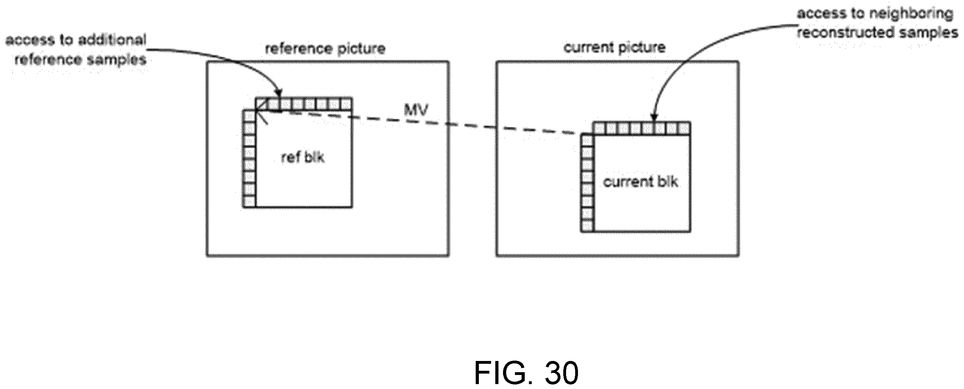

FIG. 30 illustrates the principle of Local Illumination Compensation (LIC).

FIG. 31 illustrates correspondence of spatial positions of current block template samples and reference area samples in filter coefficients derivation.

FIG. 32 illustrates Histograms of Gradients.

FIG. 33 illustrates a template region that can be selected and signaled to the decoder for RFIP parameters derivation.

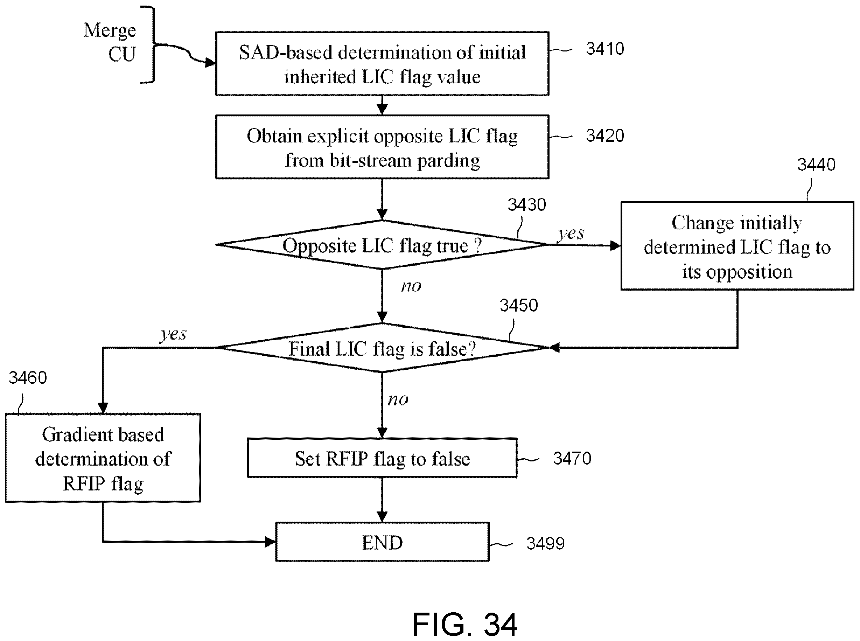

FIG. 34 illustrates a proposed RFIP flag derivation process for a merge CU, according to an embodiment.

DETAILED DESCRIPTION

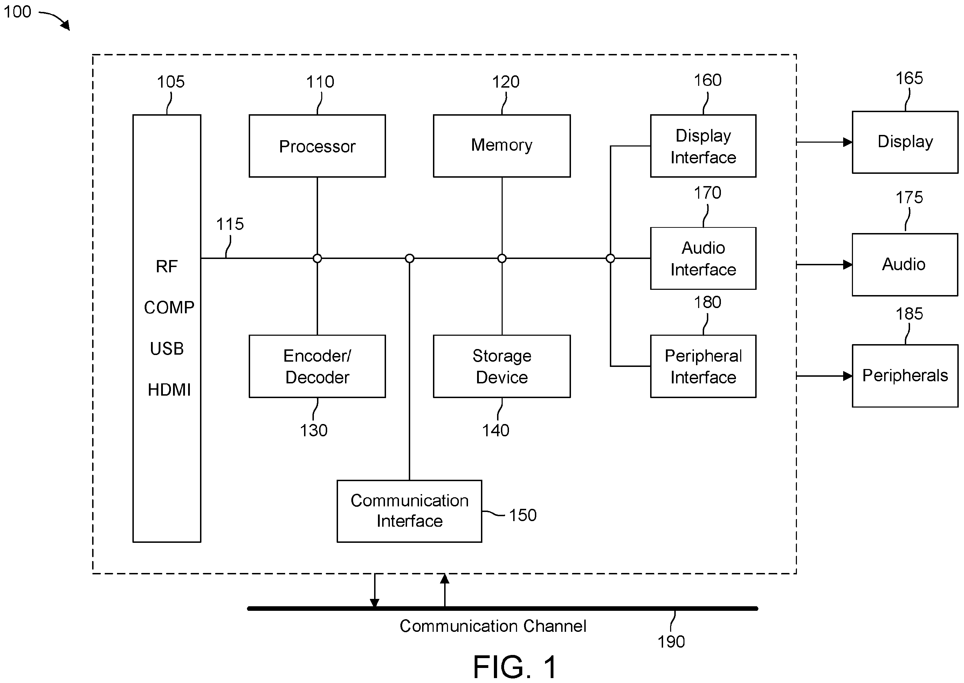

FIG. 1 illustrates a block diagram of an example of a system in which various aspects and embodiments can be implemented. System 100 may be embodied as a device including the various components described below and is configured to perform one or more of the aspects described in this application. Examples of such devices, include, but are not limited to, various electronic devices such as personal computers, laptop computers, smartphones, tablet computers, digital multimedia set top boxes, digital television receivers, personal video recording systems, connected home appliances, and servers. Elements of system 100, singly or in combination, may be embodied in a single integrated circuit, multiple ICs, and/or discrete components. For example, in at least one embodiment, the processing and encoder/decoder elements of system 100 are distributed across multiple ICs and/or discrete components. In various embodiments, the system 100 is communicatively coupled to other systems, or to other electronic devices, via, for example, a communications bus or through dedicated input and/or output ports. In various embodiments, the system 100 is configured to implement one or more of the aspects described in this application.

The system 100 includes at least one processor 110 configured to execute instructions loaded therein for implementing, for example, the various aspects described in this application. Processor 110 may include embedded memory, input output interface, and various other circuitries as known in the art. The system 100 includes at least one memory 120 (e.g., a volatile memory device, and/or a non-volatile memory device). System 100 includes a storage device 140, which may include non-volatile memory and/or volatile memory, including, but not limited to, EEPROM, ROM, PROM, RAM, DRAM, SRAM, flash, magnetic disk drive, and/or optical disk drive. The storage device 140 may include an internal storage device, an attached storage device, and/or a network accessible storage device, as non-limiting examples.

System 100 includes an encoder/decoder module 130 configured, for example, to process data to provide an encoded video or decoded video, and the encoder/decoder module 130 may include its own processor and memory. The encoder/decoder module 130 represents module(s) that may be included in a device to perform the encoding and/or decoding functions. As is known, a device may include one or both of the encoding and decoding modules. Additionally, encoder/decoder module 130 may be implemented as a separate element of system 100 or may be incorporated within processor 110 as a combination of hardware and software as known to those skilled in the art.

Program code to be loaded onto processor 110 or encoder/decoder 130 to perform the various aspects described in this application may be stored in storage device 140 and subsequently loaded onto memory 120 for execution by processor 110. In accordance with various embodiments, one or more of processor 110, memory 120, storage device 140, and encoder/decoder module 130 may store one or more of various items during the performance of the processes described in this application. Such stored items may include, but are not limited to, the input video, the decoded video or portions of the decoded video, the bitstream, matrices, variables, and intermediate or final results from the processing of equations, formulas, operations, and operational logic.

In several embodiments, memory inside of the processor 110 and/or the encoder/decoder module 130 is used to store instructions and to provide working memory for processing that is needed during encoding or decoding. In other embodiments, however, a memory external to the processing device (for example, the processing device may be either the processor 110 or the encoder/decoder module 130) is used for one or more of these functions. The external memory may be the memory 120 and/or the storage device 140, for example, a dynamic volatile memory and/or a non-volatile flash memory. In several embodiments, an external non-volatile flash memory is used to store the operating system of a television. In at least one embodiment, a fast external dynamic volatile memory such as a RAM is used as working memory for video coding and decoding operations, such as for MPEG-2, HEVC, or VVC.

The input to the elements of system 100 may be provided through various input devices as indicated in block 105. Such input devices include, but are not limited to, (i) an RF portion that receives an RF signal transmitted, for example, over the air by a broadcaster, (ii) a Composite input terminal, (iii) a USB input terminal, and/or (iv) an HDMI input terminal.

In various embodiments, the input devices of block 105 have associated respective input processing elements as known in the art. For example, the RF portion may be associated with elements suitable for (i) selecting a desired frequency (also referred to as selecting a signal, or band-limiting a signal to a band of frequencies), (ii) down converting the selected signal, (iii) band-limiting again to a narrower band of frequencies to select (for example) a signal frequency band which may be referred to as a channel in certain embodiments, (iv) demodulating the down converted and band-limited signal, (v) performing error correction, and (vi) demultiplexing to select the desired stream of data packets. The RF portion of various embodiments includes one or more elements to perform these functions, for example, frequency selectors, signal selectors, band-limiters, channel selectors, filters, downconverters, demodulators, error correctors, and demultiplexers. The RF portion may include a tuner that performs various of these functions, including, for example, down converting the received signal to a lower frequency (for example, an intermediate frequency or a near-baseband frequency) or to baseband. In one set-top box embodiment, the RF portion and its associated input processing element receives an RF signal transmitted over a wired (for example, cable) medium, and performs frequency selection by filtering, down converting, and filtering again to a desired frequency band. Various embodiments rearrange the order of the above-described (and other) elements, remove some of these elements, and/or add other elements performing similar or different functions. Adding elements may include inserting elements in between existing elements, for example, inserting amplifiers and an analog-to-digital converter. In various embodiments, the RF portion includes an antenna.

Additionally, the USB and/or HDMI terminals may include respective interface processors for connecting system 100 to other electronic devices across USB and/or HDMI connections. It is to be understood that various aspects of input processing, for example, Reed-Solomon error correction, may be implemented, for example, within a separate input processing IC or within processor 110 as necessary. Similarly, aspects of USB or HDMI interface processing may be implemented within separate interface ICs or within processor 110 as necessary. The demodulated, error corrected, and demultiplexed stream is provided to various processing elements, including, for example, processor 110, and encoder/-decoder 130 operating in combination with the memory and storage elements to process the datastream as necessary for presentation on an output device.

Various elements of system 100 may be provided within an integrated housing, Within the integrated housing, the various elements may be interconnected and transmit data therebetween using suitable connection arrangement 115, for example, an internal bus as known in the art, including the I2C bus, wiring, and printed circuit boards.

The system 100 includes communication interface 150 that enables communication with other devices via communication channel 190. The communication interface 150 may include, but is not limited to, a transceiver configured to transmit and to receive data over communication channel 190. The communication interface 150 may include, but is not limited to, a modem or network card and the communication channel 190 may be implemented, for example, within a wired and/or a wireless medium.

Data is streamed to the system 100, in various embodiments, using a Wi-Fi network such as IEEE 802. 11. The Wi-Fi signal of these embodiments is received over the communications channel 190 and the communications interface 150 which are adapted for Wi-Fi communications. The communications channel 190 of these embodiments is typically connected to an access point or router that provides access to outside networks including the Internet for allowing streaming applications and other over-the-top communications. Other embodiments provide streamed data to the system 100 using a set-top box that delivers the data over the HDMI connection of the input block 105. Still other embodiments provide streamed data to the system 100 using the RF connection of the input block 105.

The system 100 may provide an output signal to various output devices, including a display 165, speakers 175, and other peripheral devices 185. The other peripheral devices 185 include, in various examples of embodiments, one or more of a stand-alone DVR, a disk player, a stereo system, a lighting system, and other devices that provide a function based on the output of the system 100. In various embodiments, control signals are communicated between the system 100 and the display 165, speakers 175, or other peripheral devices 185 using signaling such as AV. Link, CEC, or other communications protocols that enable device-to-device control with or without user intervention. The output devices may be communicatively coupled to system 100 via dedicated connections through respective interfaces 160, 170, and 180. Alternatively, the output devices may be connected to system 100 using the communications channel 190 via the communications interface 150. The display 165 and speakers 175 may be integrated in a single unit with the other components of system 100 in an electronic device, for example, a television. In various embodiments, the display interface 160 includes a display driver, for example, a timing controller (T Con) chip.

The display 165 and speaker 175 may alternatively be separate from one or more of the other components, for example, if the RF portion of input 105 is part of a separate set-top box. In various embodiments in which the display 165 and speakers 175 are external components, the output signal may be provided via dedicated output connections, including, for example, HDMI ports, USB ports, or COMP outputs.

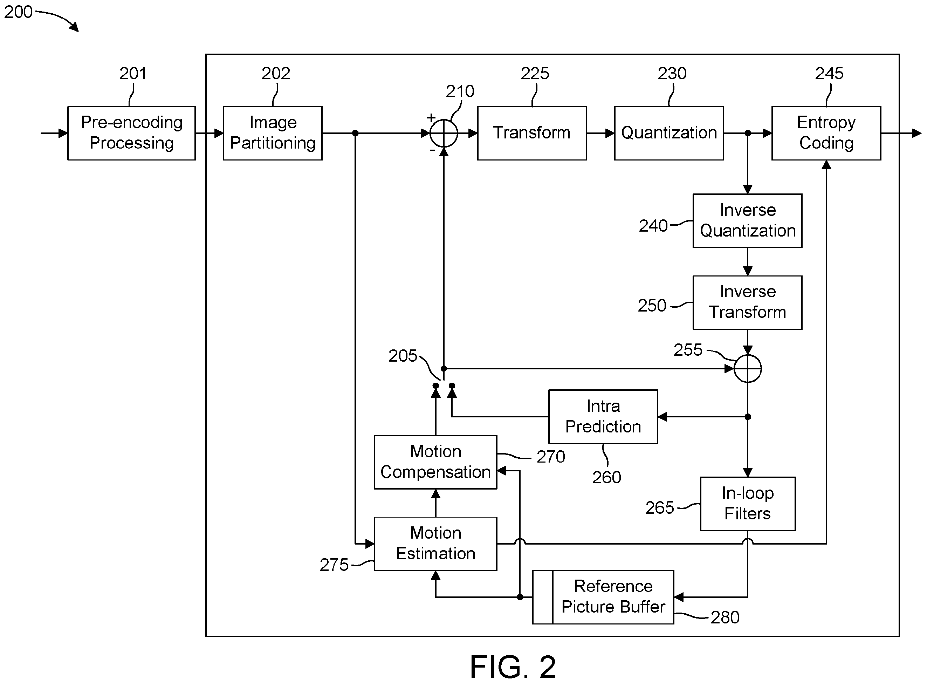

FIG. 2 illustrates an example of a block-based hybrid video encoder 200, such as a VVC (Versatile Video Coding) encoder. FIG. 2 may also illustrate an encoder in which improvements are made to the VVC standard or an encoder employing technologies similar to VVC.

In the present application, the terms "reconstructed" and "decoded" may be used interchangeably, the terms "encoded" or "coded" may be used interchangeably, and the terms "image," "picture" and "frame" may be used interchangeably. Usually, but not necessarily, the term "reconstructed" is used at the encoder side while "decoded" is used at the decoder side.

Before being encoded, the video sequence may go through pre-encoding processing (201), for example, applying a color transform to the input color picture (e.g., conversion from RGB 4:4:4 to YCbCr 4:2:0), or performing a remapping of the input picture components in order to get a signal distribution more resilient to compression (for instance using a histogram equalization of one of the color components). Metadata can be associated with the preprocessing, and attached to the bitstream.

In the encoder 200, a picture is encoded by the encoder elements as described below. The picture to be encoded is partitioned (202) and processed in units of, for example, CUs (Coding Units). Each unit is encoded using, for example, either an intra or inter mode. When a unit is encoded in an intra mode, it performs intra prediction (260). In an inter mode, motion estimation (275) and compensation (270) are performed. The encoder decides (205) which one of the intra mode or inter mode to use for encoding the unit, and indicates the intra/inter decision by, for example, a prediction mode flag. Prediction residuals are calculated, for example, by subtracting (210) the predicted block from the original image block.

The prediction residuals are then transformed (225) and quantized (230). The quantized transform coefficients, as well as motion vectors and other syntax elements such as the picture partitioning information, are entropy coded (245) to output a bitstream. As a non-limiting example, context-based adaptive binary arithmetic coding (CABAC) can be used to encode syntax elements into the bitstream.

The encoder can skip the transform and apply quantization directly to the non-transformed residual signal. The encoder can bypass both transform and quantization, i.e., the residual is coded directly without the application of the transform or quantization processes.

The encoder decodes an encoded block to provide a reference for further predictions. The quantized transform coefficients are de-quantized (240) and inverse transformed (250) to decode prediction residuals. Combining (255) the decoded prediction residuals and the predicted block, an image block is reconstructed. In-loop filters (265) are applied to the reconstructed picture to perform, for example, deblocking/SAO (Sample Adaptive Offset)/ALF (Adaptive Loop Filter) filtering to reduce encoding artifacts. The filtered image is stored in a reference picture buffer (280).

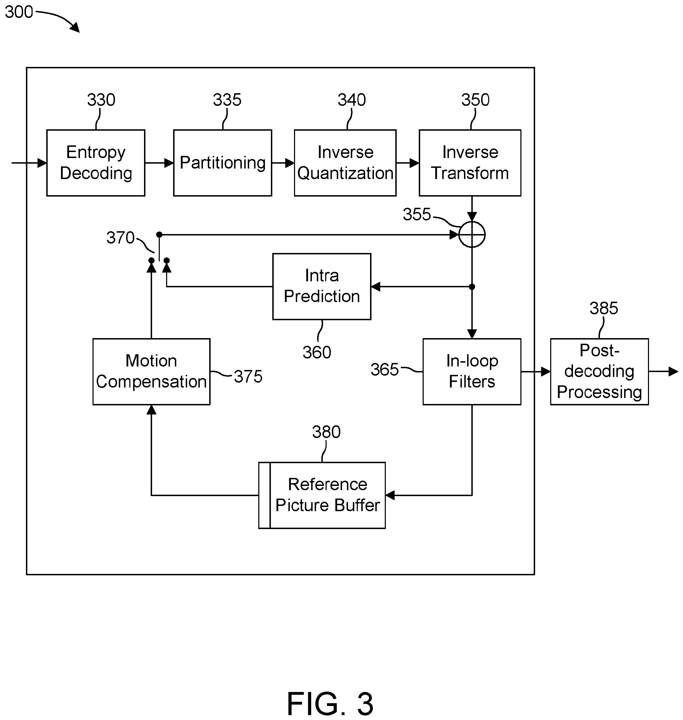

FIG. 3 illustrates a block diagram of an example video decoder 300. In the decoder 300, a bitstream is decoded by the decoder elements as described below. Video decoder 300 generally performs a decoding pass reciprocal to the encoding pass as described in FIG. 2. The encoder 200 also generally performs video decoding as part of encoding video data.

In particular, the input of the decoder includes a video bitstream, which can be generated by video encoder 200. The bitstream is first entropy decoded (330) to obtain transform coefficients, prediction modes, motion vectors, and other coded information. The picture partition information indicates how the picture is partitioned. The decoder may therefore divide (335) the picture according to the decoded picture partitioning information. The transform coefficients are de-quantized (340) and inverse transformed (350) to decode the prediction residuals. Combining (355) the decoded prediction residuals and the predicted block, an image block is reconstructed. The predicted block can be obtained (370) from intra prediction (360) or motion-compensated prediction (i.e., inter prediction) (375). In-loop filters (365) are applied to the reconstructed image. The filtered image is stored at a reference picture buffer (380). Note that, for a given picture, the contents of the reference picture buffer 380 on the decoder 300 side is identical to the contents of the reference picture buffer 280 on the encoder 200 side for the same picture.

The decoded picture can further go through post-decoding processing (385), for example, an inverse color transform (e.g., conversion from YCbCr 4:2:0 to RGB 4:4:4) or an inverse remapping performing the inverse of the remapping process performed in the pre-encoding processing (201). The post-decoding processing can use metadata derived in the pre-encoding processing and signaled in the bitstream.

As stated above with regards to general block-based video codecs, some motion information is associated to each block coded in inter mode. The following briefly presents the block structure used in HEVC and VVC to represent a compressed picture, then describes the motion representations that can be assigned to an inter block.

Block structure in HEVC

In the state-of-the-art video compression systems, a picture is divided into so-called Coding Tree Units (CTU), whose size is typically 64x64, 128x128, or 256x256 pixels.

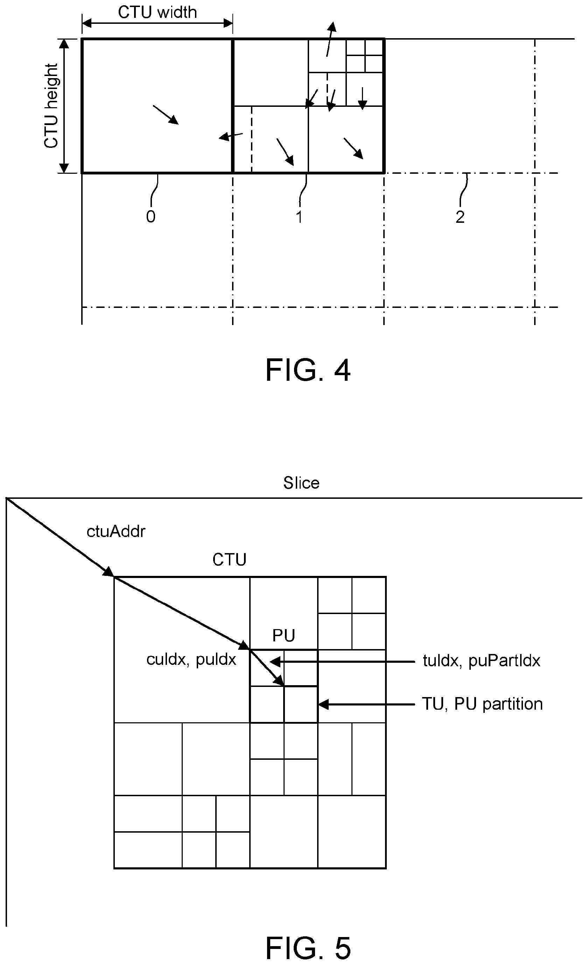

Each CTU is represented by a Coding Tree in the compressed domain. In the HEVC standard, this consists in a quad-tree division (QT) of the CTU, where each leaf is called a Coding Unit (CU), as illustrated in FIG. 4 and FIG. 5.

Each CU is then given some Intra or Inter prediction parameters (Prediction Info). To do so, it is spatially partitioned into one or more Prediction Units (PUs), each PU being assigned some prediction information. The Intra or Inter coding mode is assigned on the CU level.

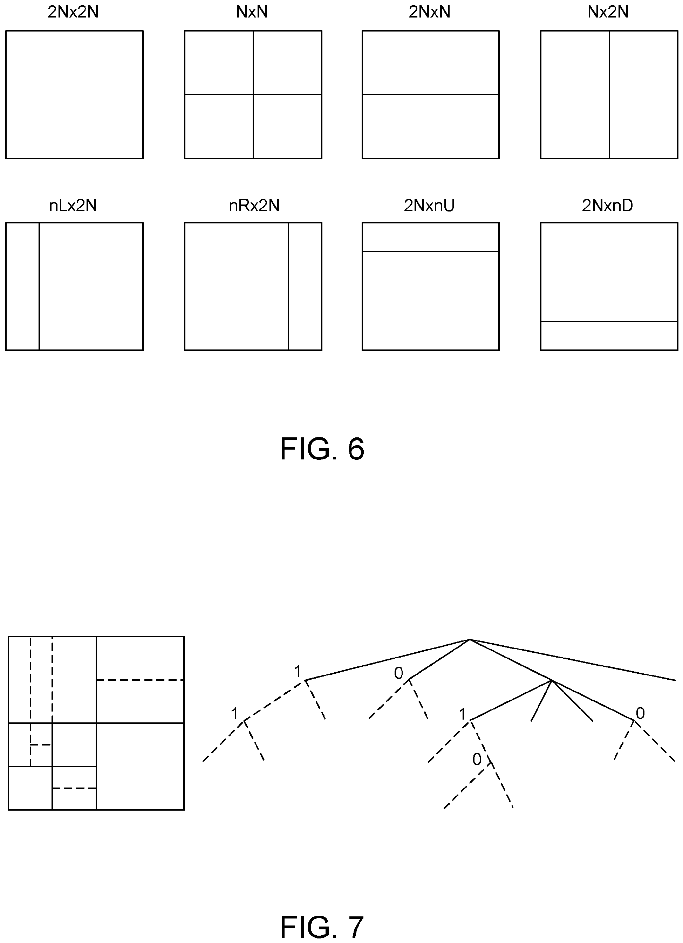

The Partition types existing in HEVC are illustrated in FIG. 6. They include square partitions (2Nx2N and NxN), which are the only ones used in both Intra and Inter CUs, symmetric non-square partitions (2NxN, Nx2N, used only in Inter CUs), and asymmetric Partitions (used only in Inter CUs).

Block structure in VVC

In VVC, a picture is divided into square CTUs as in HEVC. A CTU in VVC may be of size 32x32, 64x64 or 128x128. The CTU division of a picture thus forms a regular grid, whose upper and left bounds spatially coincide with the top and left border of the picture.

Each CTU is split into coding units according to a so-called coding tree as illustrated in FIG. 7. The coding tree is made of two stages: A CTU is first partitioned by a quaternary tree (or quad-tree/QT). A quad-tree split divides a coding tree node corresponding to a square picture block into four nodes corresponding to four sub-blocks of equal sizes (see solid lines in FIG. 7).

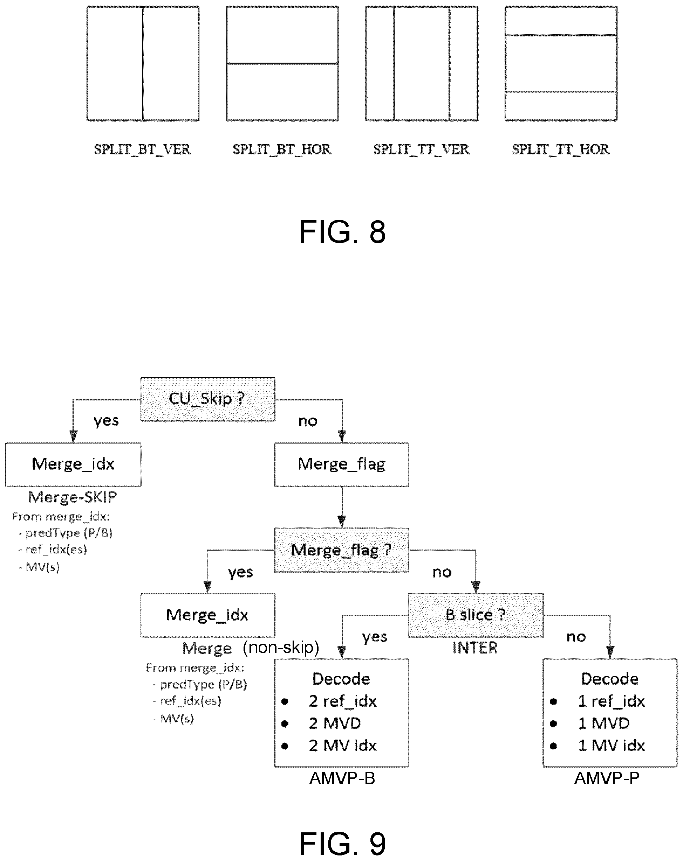

The quad-tree leaves can then be further partitioned by a so-called multi-type tree (MTT), which involves four split types (or split modes), illustrated in FIG. 8. These split types are the vertical and horizontal binary split (BT) modes, noted SPLIT_BT_VER and SPLIT_BT_HOR and the vertical and horizontal ternary split (TT) modes SPLIT_TT_VER and SPLIT_TT_HOR. A binary split divides a block into two sub-blocks, with half size of the parent block, according to the split orientation. A ternary split divides a block into three sub-blocks, with sizes respectively equal to 1/4,1/2 and 1/4 of the parent block, in the considered split orientation.

The leaves of the coding tree of a CTU are the coding unit(s), in the case of a joint coding shared by luma and chroma component.

In an intra picture, separated coding trees may be used, for luma component on one hand and chroma components on the other hand. The luma component part of a CTU is called a luma coding tree block. A luma coding tree block (CTB) is then associated to a coding tree, whose leaves are associated to luma coding blocks. Furthermore, in the case of separated luma/chroma coding trees and a 3-components picture, the two chroma CTBs share the same coding tree.

Contrary to HEVC, in VVC, in most cases, CU, PU and TU have equal size, which means coding units are generally not partitioned into PU or TU, except in some specific coding modes.

Inter prediction information representation and coding in HEVC

In the HEVC video standard, a coding unit coded in inter mode employs one or several motion vectors respectively assigned to each PU in the CU. The coding of this motion information is performed according to the so-called AMVP mode (Adaptive Motion Vector Prediction) or the Merge mode.

The coding and decoding of inter prediction information in HEVC is summarized in FIG. 9. As can be seen, there exist three main modes for coding inter predictions parameters: skip merge mode, non-skip merge mode and AMVP mode. The skip and merge modes are signaled through two dedicated flags. AMVP mode is on when these two flags are false. The merge index enables the derivation of the prediction type (P or B picture), the reference picture list index and the associated motion vectors.

The following table summarizes differences between AMVP, merge and skip modes of an inter coded CU in HEVC.

| Mode | Pred type (P/B) | Ref pic list idx | MVPred idx | MVdiff | Merge idx | Residual |
|------|-----------------|------------------|------------|--------|-----------|----------|
| **AMVP** | X | X | X | X | | X (0/1) |
| **Merge** | | | | | X | X |
| **Skip** | | | | | X | |

AMVP mode of HEVC

In the AMVP mode of HEVC, as shown in FIG. 9, one or two reference pictures used to temporally predict a considered PU are explicitly signaled, as well as the motion vectors associated to each PU and each reference picture.

These motion vectors are predictively coded. This means a motion vector predictor (MVP) is chosen by the encoder for each reference picture and a motion vector difference noted MVd relative to each selected MVP is signaled as well. The decoder side reconstructed motion data then consists in the sum of the MVPs used for a given PU and their associated MVds.

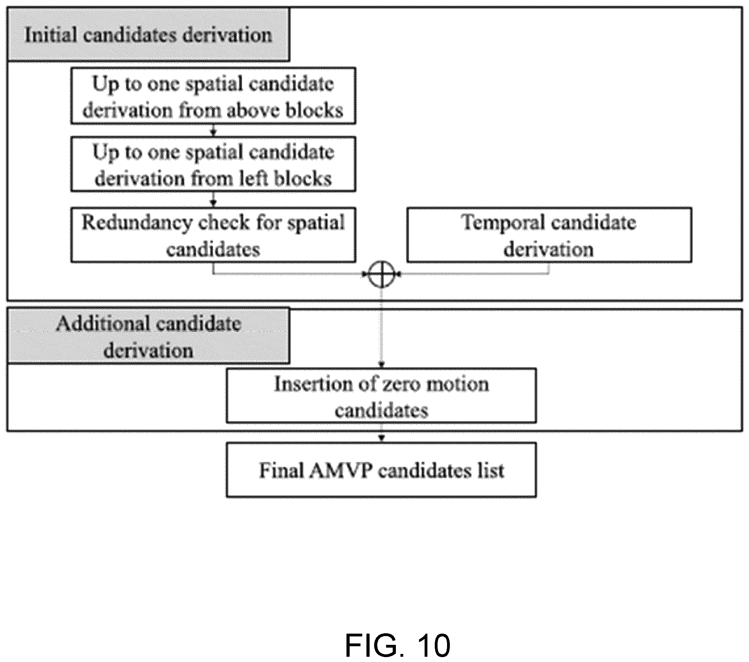

The MVP are chosen in an AMVP candidate list made of two elements for each reference picture, and the index of the chosen MVP is signaled in the bit-stream. This MVP candidate list is constructed according to the workflow of FIG. 10.

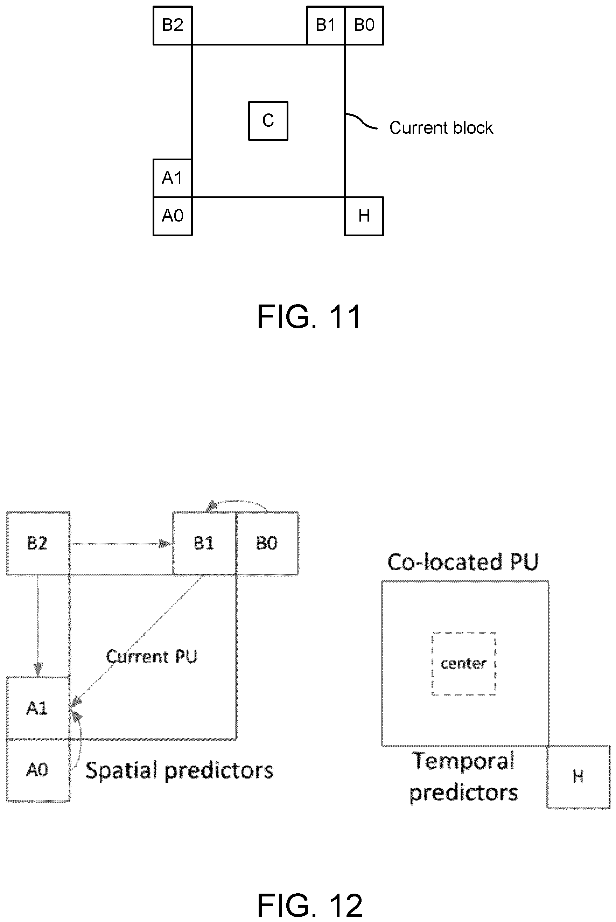

More precisely, a candidate MVP from left neighboring position A0, A1 (see FIG. 11) is derived if an inter coded block exists at the corresponding spatial location. An MVP from a top neighboring block is derived, then a temporal MVP is derived, from a reference picture at spatial position H if available, or position C otherwise. A derived MVP is scaled according to the temporal distance between the reference picture associated to the MVP and the current reference picture being considered.

A redundancy check is conducted between derived spatial MVPs, i.e., duplicate derived MVP are discarded.

The final AMVP candidate list contains the two first derived MVP candidates. If less than two MVP candidates are obtained through the above process, then the AMVP candidate list is completed with zero motion vectors.

Merge mode in HEVC

As shown in FIG. 9, the motion information coding/decoding according to the merge mode takes place in two modes: the skip mode and the non-skip merge mode. In these two modes, one single field is signaled to enable the decoder to retrieve the motion information of a PU: the so-called merge index. The merge index indicates which Motion Vector Predictor (MVP) in the list of merge motion information predictor is used to derive the motion information of current PU. In the following, the list of motion information predictors is called the merge list, or merge candidate list. Moreover, a candidate motion information predictor is called a merge candidate.

In HEVC, the merge mode consists in deriving the inter prediction information (also called motion information in the following) of a given prediction unit from a selected motion information predictor candidate. The motion information considered here includes all the inter prediction parameters of a PU, that is to:

- The uni-directional or bi-directional temporal prediction type
- The reference picture index within each reference picture list
- The motion vector(s)

In HEVC the merge candidate list is systematically made of five merge candidates. The following describes how the merge list is constructed, both on the encoder and on the decoder sides. As can be seen, up to five spatial positions are considered to retrieve some potential candidates. They are visited according to the following order:

1. Left (A1)
2. Above (B1)
3. Above right (B0)
4. Left bottom (A0)
5. Above left (B2)

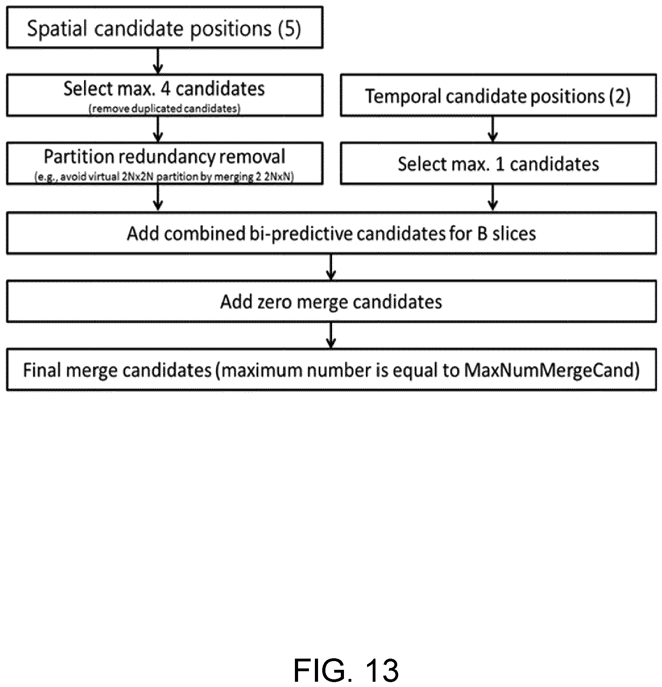

where the symbols A0, A1, B0, B1, B2 denote the spatial position shown in FIG. 12. Spatial candidates, whose associated motion information are different from each other are selected. Then a temporal predictor noted TMVP is selected by considering the temporal motion information located at position H, and then "center" is candidate at position H if the considered reference picture is not available. A last pruning process then takes place (see FIG. 13), to ensure the selected set of spatial and temporal candidates does not contain redundant candidate.

Next, in the case of a B slice, candidates of another type are pushed to the merge list if it is not full: the so-called combined candidates. This consists in forming a candidate made of the motion information associated to one reference picture list (L0) from one candidate already present in the merge list, with the motion associated to the other reference picture list (L1) from another candidate already present in the merge list.

Finally, if the merge list is still not full (5 elements) then zero motion vectors are pushed to the back of the merge list until it is full.

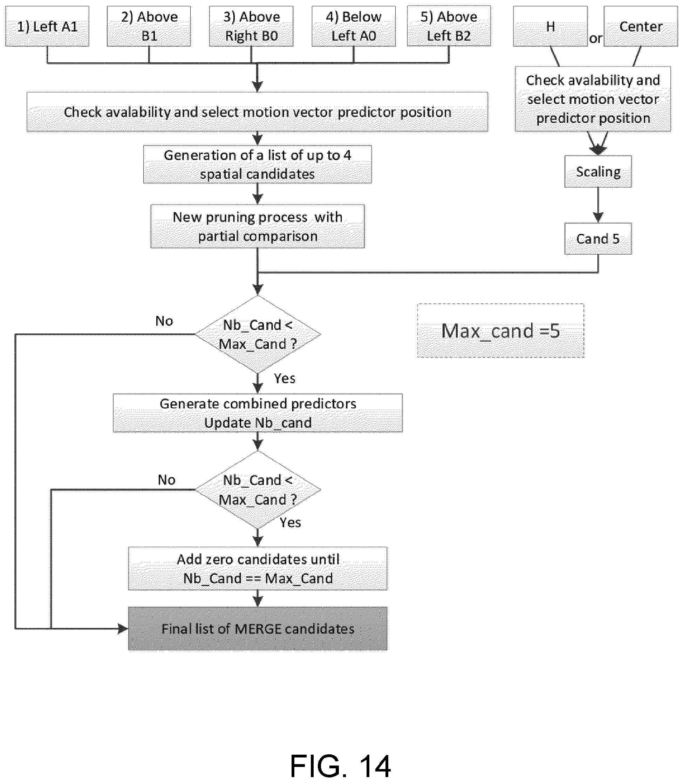

The overall process of merge list construction in HEVC is detailed in the diagram of FIG. 14.

Inter prediction information representation and coding in VVC

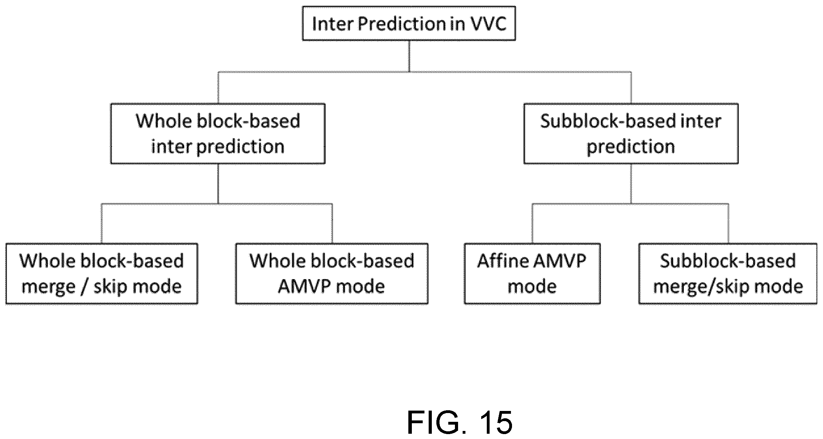

In VVC, the motion data representation is richer than in HEVC. It can be divided into two main categories: whole-block-based motion representation and sub-block-based motion representation, as illustrated in FIG. 15. In each category, two modes for coding the motion information can be used, which are merge/skip and AMVP, similarly to HEVC.

The whole-block-based motion representation basically consists in assigning one set of motion information, made of one or two motion vectors and associated reference picture(s) to an inter block. Thus, the motion information of that block is represented under the form of a single motion vector or a single pair of motion vectors for the whole block.

On the other hand, sub-block-based motion coding mode typically divides a block into 4x4 or 8x8 luma samples subblocks and assigns an individual set of motion information to each subblock.

These two categories are described in further detail below.

Whole-block-based motion representation and coding in VVC

Whole-block-based AMVP mode in VVC

The AMVP mode of VVC is similar to that of HEVC. It explicitly signals the Motion Vector as a MV Difference relative to a selected MVP for a given reference picture, together with the reference picture index that identifies the reference picture associated to the coded motion vector.

The AMVP motion vector predictor (MVP) candidate list in VVC is made of exactly two elements as in HEVC, and the following elements are employed to construct it on the encoder and decoder sides.

- Up to 4 spatial candidates as in HEVC
- Up to 1 temporal MVP candidate as in HEVC
- Up to 4 HMVP (History-Based Motion Vector Prediction) candidates
- Zero motion vector if needed to get 2 MVP candidates in the final list.

HMVP candidates are new in VVC. The principle of HMVP is to use previously coded MV as MVPs which are associated with adjacent or non-adjacent blocks relative to current block. To do so, a table of HMVP candidates is maintained at both encoder and decoder sides and updated on the fly, as a first-in-first-out (FIFO) buffer of MVPs. There are up to five candidates in the HMVP table. After coding one inter predicted block which is not in sub-block mode (including affine mode) or GPM (geometric partition mode), the table is updated by appending the associated motion information to the end of the table as a new HMVP candidate. The FIFO rule is applied to manage the table wherein, in addition to the basic FIFO mechanism, the redundant candidate in the HMVP table is firstly removed instead of the first one. The table is reset at each CTU row to enable parallel processing.

Aside from the AMVP candidate list, the whole-block-based AMVP motion coding mode of VVC employs new tools compared to HEVC as described below.

SMVD (Symmetric Motion Vector Difference). SMVD consists in setting the MVD associated to reference picture list 1 (L1) equal to the opposite of the MVD associated to reference picture list 0 (L0) for a given block. Moreover, the reference pictures used in SMVD mode are derived by the decoder with some pre-defined rules. SMVD enables reducing the rate cost for coding MVD information and is selected at block level.

AMVR (Adaptive Motion Vector Resolution). The AMVR tool allows signaling the MVD with quarter-pel, half-pel, integer-pel or 4-pel luma sample resolutions. This allows saving bits in the coding of MVD information also. In AMVR, the motion vector resolution is chosen at block level.

BCW (Bi-prediction with coding unit weights) enables bi-prediction of a block with unequal weights, signaled at block (CU) level.

Finally, the internal motion vector representation in the VVC codec is achieved at 1/16-luma sample accuracy, instead of 1/4-luma sample accuracy in HEVC.

Whole-block-based merge modes in VVC

The whole-block-based merge mode in VVC, also called regular merge mode, has a different merge MVP candidate list construction from HEVC, and introduces three new merge coding modes, which are MMVD (Merge Mode with MV Difference), GPM (Geometric Partitioning Mode) and CIIP (Combined Intra/Inter Prediction).

The merge MVP candidate list is constructed with the following types of MVP candidates:

1. Spatial candidates. They are similar to HEVC except the two first candidates are swapped.
2. Temporal MVP candidates are similar to HEVC.
3. HMVP candidates. Several HMVP candidates are inserted into the merge list so that the merge list reaches the maximum allowed number of MVP candidates minus 1.
4. Pairwise Average candidates. Up to one pairwise average candidate is added to the merge candidate list. Pairwise candidates are computed as follows. The two first MVP candidates present in the list are considered and their motion vectors are averaged. This averaging is computed separately for each reference picture list. So, if both MVP are bi-directional ones, motion vectors related to both lists L0 and L1 are averaged. If only one motion vector is present in a reference picture list, it is taken as is to form the pairwise candidate.
5. Zero MV candidates

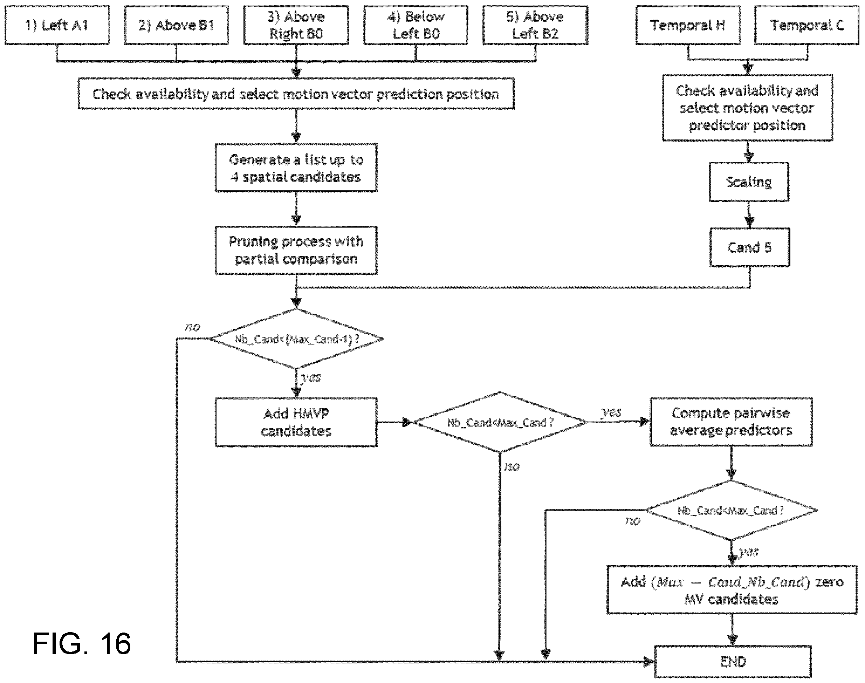

The whole-block-based (or non-subblock-based) merge list construction process of VVC is illustrated in FIG. 16.

EP 4 629 626 A1

MMVD (Merge mode with MV Differences) merge mode

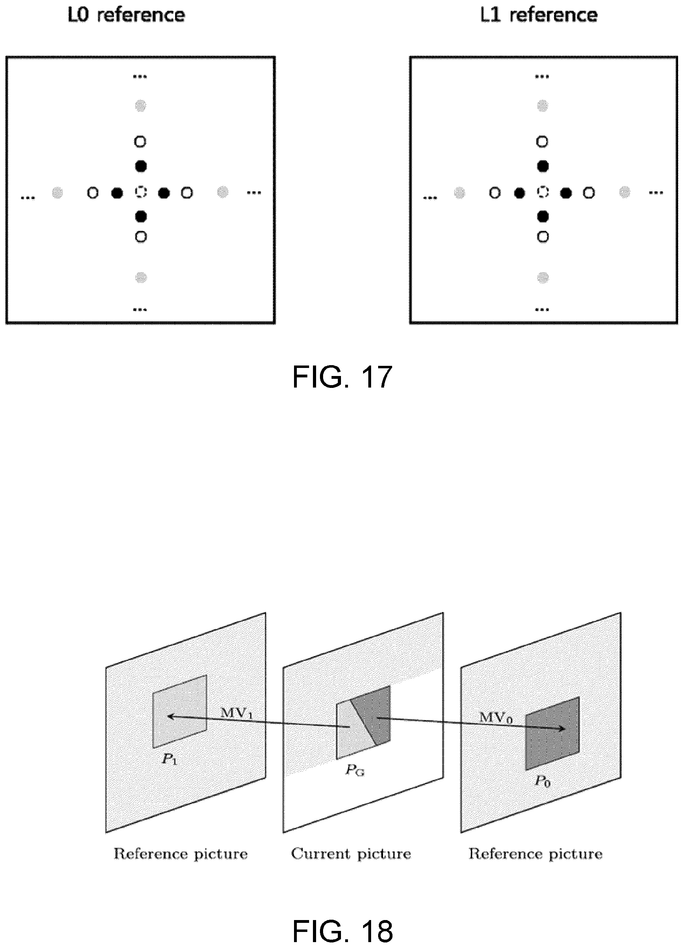

The MMVD mode allows coding a limited motion vector difference (MVd) on top of a selected merge MVP candidates, to represent the motion information of a CU. MMVD coding is limited to four vector directions and eight magnitude values as shown in FIG. 17, from 1/4 luma sample to 32-luma sample. MMVD provides an intermediate accuracy level, hence an intermediate trade-off between the rate cost and MV accuracy to signal the motion information.

GPM (Geometric Partitioning Mode) merge mode

In VVC, a geometric partitioning mode is supported for inter prediction. This consists in partitioning an inter CU into two motion partitions along a straight line (see FIG. 18). Thus, the partition may be non-rectangular. If rectangular, an asymmetric splitting is done, avoiding redundancy with CU-level binary splitting.

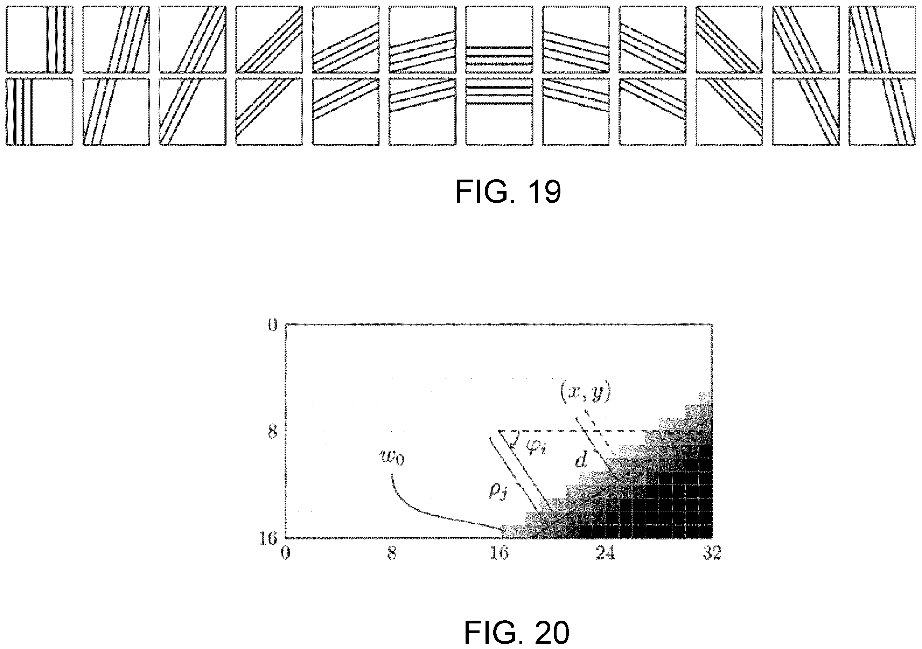

The use of GPM is signalled with a CU-level flag as a particular merge mode. The split line orientation and position relative to the CU center is signaled at CU level through a dedicated GPM index. In total 64 partitions are supported by geometric partitioning mode for each possible CU size $w \times h = 2^m \times 2^n$ with $m, n \in \{3 \cdots 6\}$ excluding 8x64 and 64x8. For instance, FIG. 19 illustrates various split lines that can be achieved, at different position offsets from the CU center, and for various split line angles.

Each part of a geometric partition in the CU is inter-predicted using its own motion. Only uni-prediction is allowed for each partition, that is, each part has one motion vector and one reference picture index. The uni-prediction motion constraint is applied to ensure that only two motion compensated prediction are needed for each CU, similarly to the conventional bi-prediction.

The motion vector of each partition is derived from up to two merge indices, respectively for each partition, similarly to the regular whole-block-based merge mode.

After predicting each part of the geometric partition, the sample values along the geometric partition edge are adjusted using a blending processing with adaptive weights, as illustrated in FIG. 20. This is the prediction signal for the whole CU and the transform and quantization process will be applied to the whole CU (not for each partition) as in other prediction modes.

CIIP (Combined Intra/inter Prediction) merge mode

The CIIP merge mode consists in a combining an inter prediction signal with an intra prediction signal to predict a current CU. The inter prediction signal in the CIIP mode is derived using the same inter prediction process as applied to the regular merge mode; and the intra prediction signal is derived following the regular intra prediction process with the planar mode. Then, the intra and inter prediction signals are combined using weighted averaging, where the weight value is calculated depending on the coding modes of the top and left neighboring blocks:

$$PCIIP = (Wmerge \times Pmerge + Wintra \times Pintra + 2) \gg 2.$$

The sums of weights $W_{merge}$ and $W_{intra}$ is equal to 4 and these weights are constant in the whole CU.

Sub-block-based motion representation and coding in VVC

Affine motion compensation in VVC

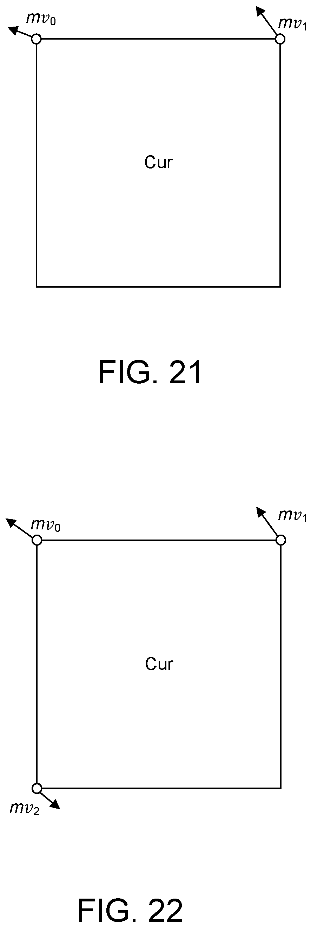

In HEVC, only a translation motion model is applied for motion compensated temporal prediction (MCP). Such translational motion is not able to capture some types of motion like zoom in, zoom out, rotation, perspective motions and irregular motions. In VVC, a sub-block-based affine motion compensation prediction can be used at CU level. As shown in FIG. 21 and FIG. 22, the affine motion field of the block is described by motion information of two control point motion vectors (4-parameter affine motion model) or three control point motion vectors (6-parameter affine motion model). In FIG. 21, the vectors $mv_0$, $mv_1$ and $mv_2$ are the control point motion vectors (CPMVs) associated to the block and used to represent the affine motion field of the considered block.

For the 4-parameter affine motion model, motion vector at sample location (x, y) in a block is derived as:

$$\begin{cases} mv_x = \dfrac{mv_{1x} - mv_{0x}}{W} x + \dfrac{mv_{0y} - mv_{1y}}{W} y + mv_{0x} \\ mv_y = \dfrac{mv_{1y} - mv_{0y}}{W} x + \dfrac{mv_{1x} - mv_{0x}}{W} y + mv_{0y} \end{cases}$$

Equation 1: 4-parameter affine motion field computation

For the 6-parameter affine motion model, motion vector at sample location (x, y) in a block is derived as:

11

$$\begin{cases} mv_x = \dfrac{mv_{1x} - mv_{0x}}{W}x + \dfrac{mv_{2x} - mv_{0x}}{H}y + mv_{0x} \\[2ex] mv_y = \dfrac{mv_{1y} - mv_{0y}}{W}x + \dfrac{mv_{2y} - mv_{0y}}{H}y + mv_{0y} \end{cases}$$

Equation 2: 6-parameter affine motion field computation

where (mv0x, mv0y) is the motion vector of the top-left corner control point, (mv1x, mv1y) is the motion vector of the top-right corner control point, and (mv2x, mv2y) is the motion vector of the bottom-left corner control point.

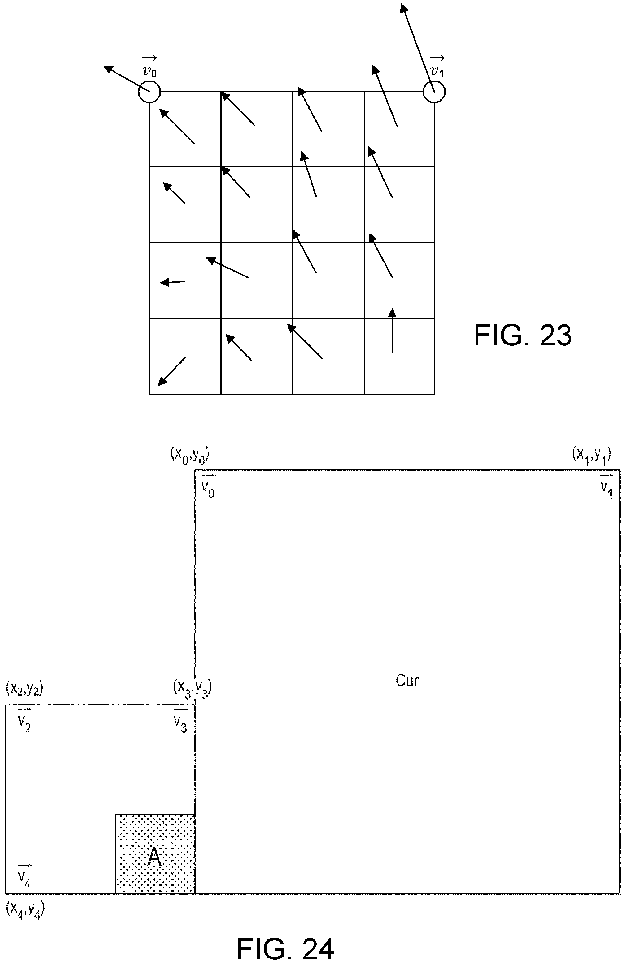

In VVC, affine motion compensation is performed on a 4x4 subblock basis. To derive the motion vector of each $4\times4$ luma subblock, the motion vector of the center sample of each subblock according to above equations, as shown in FIG. 23, is calculated according to above equations, and rounded to 1/16 fraction accuracy. Then the motion compensation interpolation filters are applied to generate the prediction of each subblock with the derived motion vector. The subblock size in chroma-components is also $4\times4$. The MV of a $4\times4$ chroma subblock is calculated as the average of the MVs of the top-left and bottom-right luma subblocks in the collocated 8x8 luma region.

As for translational motion inter prediction, there are two main affine inter prediction modes in VVC: affine AMVP mode and affine merge mode. They are described in the following.

Affine Merge mode

The affine merge mode is a particular subblock-based motion coding mode inside the sub-block merge mode. It can be applied for CUs with both width and height larger than or equal to 8. In this mode the CPMVs of the current CU are generated based on the motion information of the spatial neighboring CUs. There can be up to five CPMVP (Control Point Motion Vector Predictors) candidates and an index is signalled to indicate the one to be used for the current CU. The following three types of CPVM candidate are used to form the affine merge candidate list:

1. Inherited affine merge candidates extrapolated from the CPMVs of the neighbour CUs
2. Constructed affine merge candidates CPMVPs that are derived using the translational MVs of the neighbour CUs
3. Zero MVs

In VVC, there are maximum two inherited affine candidates, which are derived from the affine motion model of the neighboring blocks, one from left neighboring CUs and one from above neighboring CUs.

The candidate blocks are shown in FIG. 11. For the left predictor, the scan order is A0->A1, and for the above predictor, the scan order is B0->B1->B2. Only the first inherited candidate from each side is selected. When a neighboring affine CU is identified, its control point motion vectors are used to derive the CPMVP candidate in the affine merge list of the current CU. As shown in FIG. 24, if the neighbour left bottom block A is coded in affine mode, the motion vectors $v_2$, $v_3$ and $v_4$ of the top left corner, above right corner and left bottom corner of the CU which contains the block A are attained. When block A is coded with 4-parameter affine model, the two CPMVs of the current CU are calculated according to $v_2$ and $v_3$. In case that block A is coded with 6-parameter affine model, the three CPMVs of the current CU are calculated according to $v_2$, $v_3$ and $v_4$.

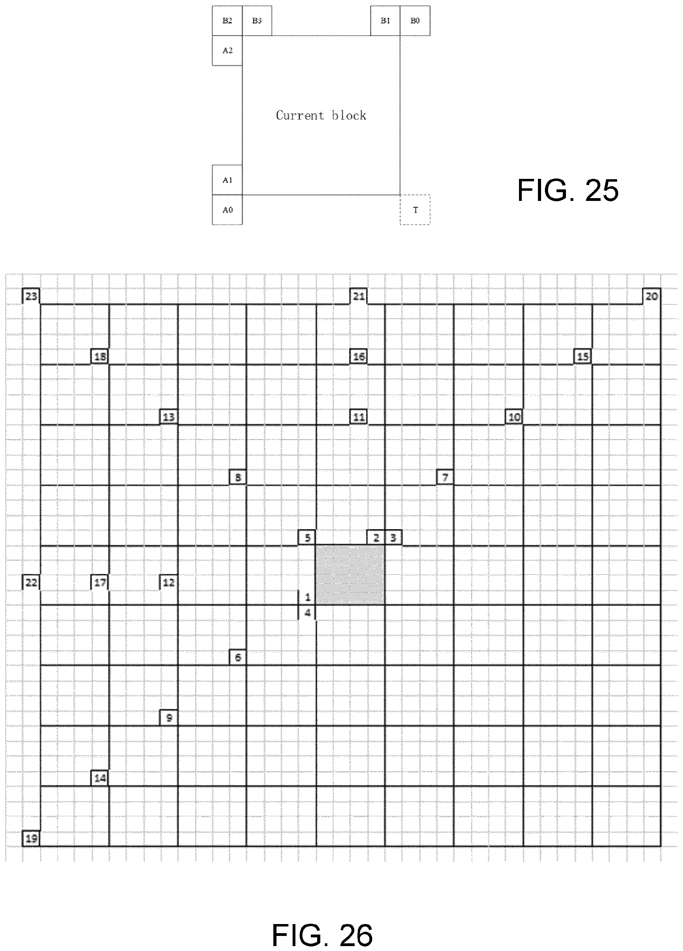

A constructed affine candidate is constructed by combining the neighbor translational motion information of each control point. The motion information for the control points is derived from the specified spatial neighbors and temporal neighbor shown in FIG. 25. CPMVk (k = 1, 2, 3, 4) represents the k-th control point. For CPMV1, B2->B3->A2 blocks are checked and the MV of the first available block is used. For CPMV2, B1->B0 blocks are checked and for CPMV3, A1->A0 blocks are checked. TMVP is used as CPMV4 if available.

After MVs of four control points are attained, affine merge candidates are constructed based on those motion information. The following combinations of control point MVs are used to generate constructed affine merge candidate, in order:

{CPMV1, CPMV2, CPMV3}, {CPMV1, CPMV2, CPMV4}, {CPMV1, CPMV3, CPMV4}, {CPMV2, CPMV3, CPMV4}, {CPMV1, CPMV2}, { CPMV1, CPMV3}

This means, for instance, that if control point motion vectors {CPMV1, CPMV2, CPMV3} are used, then they are used to generate an affine motion field for the CU, following Equation 2.

The combination of three CPMVs as above constructs a 6-parameter affine merge candidate and the combination of two CPMVs constructs a 4-parameter affine merge candidate. To avoid motion scaling process in case CPMVs point to different reference pictures, if the reference indices of control points are different, the related combination of control point MVs is discarded.

After inherited affine merge candidates and constructed affine merge candidate are considered for being appended to the affine merge candidate list, if the list is still not full, zero MVs are inserted to the end of the list.

Affine AMVP mode

The affine AMVP mode can be applied for CUs with both width and height larger than or equal to 16. An affine flag at CU level is signaled in the bitstream to indicate the use of affine AMVP mode. Another flag signals if 4-parameter affine or 6-parameter affine model is used. In affine AMVP mode, the difference of the CPMVs of current CU and their predictors CPMVPs (Control Point Motion Vector Predictors) is coded.

The CPMVPs used to predict the CPMV of a CU are taken from an affine AMVP candidate list made of two elements. The affine AMVP candidate list is constructed using the following four types of CPVM candidate in order:

1. Inherited affine AMVP candidates extrapolated from the CPMVs of the neighbour CUs
2. Constructed affine AMVP candidates CPMVPs that are derived using the translational MVs of the neighbour CUs
3. Translational MVs from neighboring CUs
4. Zero MVs

In the following the term checking is used. Checking a potential candidate means checking that a valid Affine AMVP or Affine merge candidate to predict the current CU's affine CPMVs is available and is valid, and if so, add it to the candidate list under construction.

The checking order of inherited affine AMVP candidates is the same as the checking order of inherited affine merge candidates. The only difference is that, for AVMP candidate, only the affine CU that has the same reference picture as the current block is considered. No pruning process is applied when inserting an inherited affine motion predictor into the candidate list.

A constructed affine AMVP candidate is derived from the specified spatial neighbors shown in FIG.25. The same checking order is used as in affine merge candidate construction. In addition, the reference picture index of the neighboring block is also checked. The first block in the checking order that is inter coded and has the same reference picture as the current CU is used.

When the current CU is coded with 4-parameter affine mode, and $mv_0$ and $mv_1$ are both available, they are added as one candidate in the affine AMVP list. When the current CU is coded with 6-parameter affine mode, and all three CPMVs are available, they are added as one candidate in the affine AMVP list. Otherwise, the constructed AMVP candidate is set as unavailable.

If the affine AMVP list of candidates is still less than two after valid inherited affine AMVP candidates and constructed AMVP candidate are inserted, $mv_0$ , $mv_1$ and $mv_2$ are added, in order, as the translational MVs to predict all control point MVs of the current CU, when available. Finally, zero MVs are used to fill the affine AMVP list if it is still not full.

Sub-block-based merge/skip mode

The sub-block merge/skip mode of VVC is a merge mode using a merge candidate list of at most five elements with only subblock-based motion candidates. As for regular merge, a merge index indicates the subblock-based merge candidate used to derive the motion data of a CU. This subblock-based merge candidate list is made of the following elements. The SbTMVP (Subblock-based Temporal Motion Vector Prediction) candidate is put at the first place. Then, affine merge candidates are put in the list. As a result, the subblock merge list is constructed with the following list of candidates.

1. SbTMVP
2. Inherited affine merge candidates
3. Constructed affine merge candidates CPMVPs that are derived using the translational MVs of the neighbour CUs
4. Zero MVs

The basic principle of SbTMVP is as follows. Similar to the TMVP regular merge candidate, SbTMVP uses the motion field in the collocated picture. SbTMVP differs from TMVP in the following two main aspects:

1. TMVP predicts motion at CU level, but SbTMVP predicts motion at sub-CU level;
2. Whereas TMVP fetches the temporal motion vectors from the collocated block in the collocated picture, SbTMVP applies a motion shift before fetching the temporal motion information from the collocated picture, where the motion shift is obtained from the motion vector from one of the spatial neighboring blocks of the current CU.

In the Enhanced Compression Model (ECM) developed by the Joint Video Expert Team (JVET), some new modes for motion representation are introduced on top of the VVC codec design as described below.

Non-adjacent spatial merge candidates (NASMVP)

Non-adjacent spatial MV predictor candidates are added to the regular merge list, behind the TMVP merge candidate. Spatial locations of these added merge candidate are shown in FIG. 26.

Template Matching (TM)

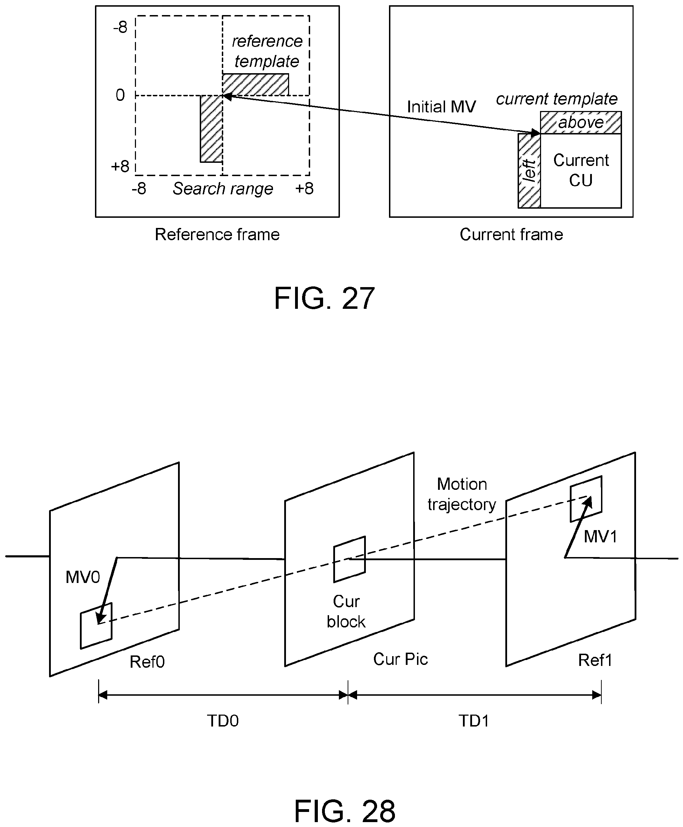

Template matching is a decoder side motion vector refinement method. It refines a CU's motion vector by matching a template region above and on the left of current CU with a template in a search area in the reference picture. As illustrated in FIG. 27, a better MV is searched around the initial MV of current CU within a [- 8, +8]-pel search range.
The refined MV is obtained by minimizing a so-called template matching cost between the template around the current CU and candidate templates in the reference picture.
In ECM, the TM technique is also used to determine some MVP candidates in regular AMVP and regular merge modes. In particular, in AMVP, the MVP candidates are determined according to the template matching error. The MVP candidate with the minimum TM cost is selected and further refined through TM.
Adaptive reordering of merge candidates with template matching (ARMC-TM)
In regular merge mode, affine merge mode and template matching merge mode (merge mode where TMP refinement is applied), the merge candidates are reordered based on their TM costs. The TM cost is computed as the SAD between the samples of the template of current block and their corresponding reference samples.

Multi-hypothesis prediction (MHP)

In the multi-hypothesis inter prediction mode, one or more additional motion-compensated prediction signals are signaled, in addition to the conventional bi prediction signal. The resulting overall prediction signal is obtained by sample-wise weighted superposition. With the bi prediction signal $p_{bi}$ and the first additional inter prediction signal/hypothesis $h_3$, the resulting prediction signal $p_3$ is obtained as follows: $p_3 = (1 - \alpha)p_{bi} + \alpha h_3$.
The motion parameters of each additional prediction hypothesis can be signaled either explicitly by specifying the reference index, the motion vector predictor index, and the motion vector difference, or implicitly by specifying a merge index. A separate multi-hypothesis merge flag distinguishes between these two signalling modes.

GPM with MMVD

In ECM, GPM is extended by applying motion vector refinement on top of the existing GPM uni-directional MVs. A flag is first signaled for a GPM CU, to specify whether this mode is used. If the mode is used, each geometric partition of a GPM CU can further decide whether to signal MVD or not. If MVD is signaled for a geometric partition, after a GPM merge candidate is selected, the motion of the partition is further refined by the signaled MVDs information.

GPM with TM

Template matching is applied to GPM. When GPM mode is enabled for a CU, a CU-level flag is signaled to indicate whether TM is applied to both geometric partitions. Motion information for each geometric partition is refined using TM. When TM is chosen, a template is constructed using left, above or left and above neighboring samples according to the partition angle.

Bilateral matching AMVP-merge mode (BM-AMVP-merge)

ECM comprises a new mode to represent a CU motion data, which basically consists in an AMVP motion predictor in one inter direction, i.e., associated to one reference picture list, and a merge mode in the opposite direction, i.e., associated to the other reference picture list.
This MV refinement mode is allowed in the case where the selected merge predictor and the AMVP predictor are such that there is at least one reference picture available in the past and one reference picture available in the future.
AMVP part of the mode is signaled as a regular uni-directional AMVP, i.e., reference index and MVD are signaled, and it has a derived MVP index if template matching is used or MVP index is signaled when template matching is disabled.
For AMVP direction (i.e., reference picture list) LX, X can be 0 or 1, the merge part in the other direction (1 - LX) is implicitly derived by minimizing the bilateral matching (BM) cost between the AMVP predictor and a merge predictor, i.e., for a pair of the AMVP and a merge motion vectors. For every merge candidate in the merge candidate list which has that other direction (1 - LX) motion vector, the bilateral matching cost is calculated using the merge candidate MV and the AMVP MV. The merge candidate with the smallest cost is selected. The bilateral matching refinement is applied to the coding block with the selected merge candidate MV and the AMVP MV as a starting point.

In the following, we briefly explain the principle of bilateral matching motion vector refinement.

Bilateral matching MV refinement

In bi-prediction operation of the ECM, a refined MV is searched around the two initial MVs (MV0 and MV1) in the reference picture lists L0 and L1, as illustrated in FIG. 28. The refined MVs are derived around the initial MVs based on the minimum bilateral matching cost between the two reference blocks in L0 and L1.

BM performs local search to derive integer sample precision intDeltaMV. The local search applies a $3\times3$ square search pattern to loop through the search range [-sHor, sHor] in horizontal direction and [-sVer, sVer] in vertical direction.

The bilateral matching cost is calculated as: bilCost = mvDistanceCost + sadCost, where mvDistanceCost is representative of the motion vector coding cost and increases as a function of the MV magnitude. When the bilCost at the center point of the $3\times3$ search pattern has the minimum cost, the intDeltaMV local search is terminated. Otherwise, the current minimum cost search point becomes the new center point of the $3\times3$ search pattern and continue to search for the minimum cost, until it reaches the end of the search range.

The existing fractional sample refinement is further applied to derive the final deltaMV. The refined MVs after the first pass is then derived as:

- 

$$MV0\_pass1 = MV0 + deltaMV$$

- 

$$MV1\_pass1 = MV1 - deltaMV$$

Support of AMVP-merge mode in low-delay configuration

The BM-AMVP-merge mode presented above, also called MVP-merge mode, is initially only proposed for B picture which have at least one reference picture in the past and at least one reference picture in the future, in terms of picture display order.

In a more recent version (e.g., 9) of ECM, it is possible to activate the AMVP-Merge mode introduced above in low-delay pictures. An inter coded picture is said to be low-delay if its both reference picture are in the past of current picture, i.e., have Picture Order Count (POC, i.e., picture index in display order) lower than the POC of current picture.

To do so, it proposed to allow AMVP-Merge for low-delay pictures, by removing the bilateral matching reordering and refinement from the AMVP-Merge prediction mode.

Thereofore, the following aspects are applied in ECM-9.0:

1. The amvpMerge is enabled fir a bi-predicted block even the reference picture pair is not true bi-directional pictures for low-delay case. Additionally, the restriction condition on the resampled, long-term and WP reference picture are relaxed for low-delay picture cases.

2. To deactivate bilateral matching reordering in low-delay blocks (block with has its 2 references picture in the past or in the future), BM cost of an amvpMerge candidate which is not true bi-direction is set to be the maximum value during merge candidate reordering.

Support of AMVP-merge mode in affine motion representation mode

Contribution JVET-AE0148 (see an article by Zhi Zhang, et al., entitled "Non-EE2: Affine subblock BDOF refinement," Joint Video Experts Team (JVET) of ITU-T SG 16 WP 3 and ISO/IEC JTC 1/SC 29 31st Meeting, Geneva, CH, 11-19 July 2023, Document: JVET-AE0148-v21) proposes the AMVP-Merge mode for affine blocks. Like the AMVP-Merge mode in ECM-9.0, it signals reference picture list index, reference picture index and MVP index to indicate the AMVP predictor. The merge candidate is derived by using ARMC reordering. A flag is signalled to indicate an AMVP-merge block is affine coded block or not when the block size is equal or greater than $8\times8$ and the current picture is not a low-delay picture.

Recent advances in temporal prediction enhancements

Local illumination compensation (LIC)

LIC is an inter prediction technique to model local illumination variation between the current block and its prediction block as a function of illumination variation between the current block template and reference block template. The parameters of the function can be denoted by a scale $\alpha$ and an offset $\beta$, which forms a linear equation, that is, $\alpha*p[x]+\beta$ to compensate illumination changes, where p[x] is a reference sample pointed to by MV at a location x on the reference picture. When wrap around motion compensation is enabled, the MV shall be clipped with wrap around offset taken into consideration. Since $\alpha$ and $\beta$ can be derived based on the current block template and reference block template, no signaling overhead is required for them, except that an LIC flag is signaled for AMVP mode to indicate the use of LIC. For the merge mode, the LIC flag is not inherited from a merge candidate, instead, it is derived on-the-fly. More specifically, the LIC flag of a merge candidate is derived by comparing two template costs: a SAD-based template cost, denoted as C0, and a Mean Removal SAD (MRSAD)-based template cost, denoted as C1. The LIC flag is set to be false if $C0 \le C1$ and is set to be true if $C0 > C1$. To favor the inherited LIC flag, C0 is multiplied by $\alpha$ if the inherited LIC flag is false while C1 is multiplied by $\alpha$ if the inherited LIC flag is true, where $\alpha < 1$.

The local illumination compensation proposed in JVET-O0066 (see an article by Vadim Seregin, et al., entitled "CE4-3.1a and CE4-3.1b: Unidirectional local illumination compensation with affine prediction," Joint Video Experts Team (JVET) of ITU-T SG 16 WP 3 and ISO/IEC JTC 1/SC 29/WG 11 15th Meeting: Gothenburg, SE, 3-12 July 2019, Document: JVET-O0066-v1) is used for inter CUs with the following modifications.

- Intra neighbor samples can be used in LIC parameter derivation;
- LIC is disabled for blocks with less than 32 luma samples;
- For both non-subblock and affine modes, LIC parameter derivation is performed based on the template block samples corresponding to the current CU, instead of partial template block samples corresponding to first top-left 16x16 unit;
- Samples of the reference block template are generated by using MC with the block MV without rounding it to integer-pel precision.

For the bi-predictive inter CUs, two sets of LIC parameters are separately derived for L0 and L1 prediction samples. An iterative manner to derive the L0 and L1 LIC parameters is applied. Specifically, L0 LIC parameters are firstly derived by minimizing the difference between L0 template prediction T0 and the template T, and the samples in T are updated by subtracting the corresponding samples in T0. Then, the L1 parameters are calculated that minimizes the difference between L1 template prediction T1 and the updated template. Finally, the L0 parameter is refined again in the same way.

More recently, in contribution JVET-AG0276 (see an article by Yang Wang, entitled "EE2 Test 2.6g, 2.6h, 2.6i, 2.6j: Combination of tests on LIC improvement," Joint Video Experts Team (JVET) of ITU-T SG 16 WP 3 and ISO/IEC JTC 1/SC 29 33rd Meeting, by teleconference, 17-26 January 2024 Document: JVET-AG0276-v3), the three following improvements are brought to the LIC tool.

- LIC with multiple templates is proposed. Besides using a template comprising neighbouring samples both on top of and to the left of the current block, two new LIC modes using top-only or left-only template are proposed to derive the parameters of LIC. LIC with multiple templates is only applied to AMVP uni-predicted blocks. LIC with slope adjustment is proposed, in which an adjustment parameter is used to modify parameters of LIC. The adjustment parameter is signalled for AMVP mode. LIC with slope adjustment is not applied to bi-prediction.
- The LIC flag is explicitly signaled for inter-prediction merge modes, instead of inheriting the flag value from a merge candidate as was previously done. The flag is signaled to indicate if the original inherited LIC flag or the reverse LIC flag value is used for a merge candidate. The flag is signaled for the regular merge mode, affine merge mode and TM merge mode.
- Non-local illumination compensation (NLIC) is now supported. Instead of template samples, in the method, the linear model is derived from the previously coded inter CUs by minimizing the difference between their reconstruction and prediction samples. When constructing the merge lists, up to 16 and 6 NLIC candidates (obtained from both spatial adjacent and non-adjacent positions) are inserted to the lists of regular merge and subblock merge respectively, and reordered with the existing merge candidates. The lengths of the output merge lists are kept unchanged. The same pattern used for the non-adjacent merge mode (see FIG. 26) is reused to locate the non-adjacent positions in the scheme.

In contribution JVET-AG0195 (see an article by Chun-Chi Chen, et al., entitled "Non-EE2: LIC model parameter inheritance for merge modes," Joint Video Experts Team (JVET) of ITU-T SG 16 WP 3 and ISO/IEC JTC 1/SC 29 33rd Meeting, by teleconference, 17-26 January 2024, Document: JVET-AG0195-v21), the following further improvements of LIC are proposed.

Merge candidates with LIC flag enabled may be duplicated. The corresponding LIC model parameters are inherited in addition to merged motion information. Two methods are envisioned to determine how the new merge candidates are selected in mode decision.

- The LIC flag derivation process based on SAD/MR-SAD template matching cost comparison is expanded to compete with the new merge candidate (i.e., competing with ECM LIC and LIC off using the template cost).
- The new merge candidates are put together with other ECM's merge candidates in ARMC process for reordering.

If the new merge candidate stays at the last after competition, the derivation process of LIC model parameters for the new merge candidates could be bypassed completely in the motion compensation process of either template or prediction blocks. Besides, in the case of GPM merge modes, LIC model parameters from causally neighboring blocks could be inherited conditionally, when they have LIC flags determined to be true, in addition to motion information during the construction process of the GPM merge candidate list. Accordingly, LIC could be enabled for GPM without the model parameter derivation in motion compensation.

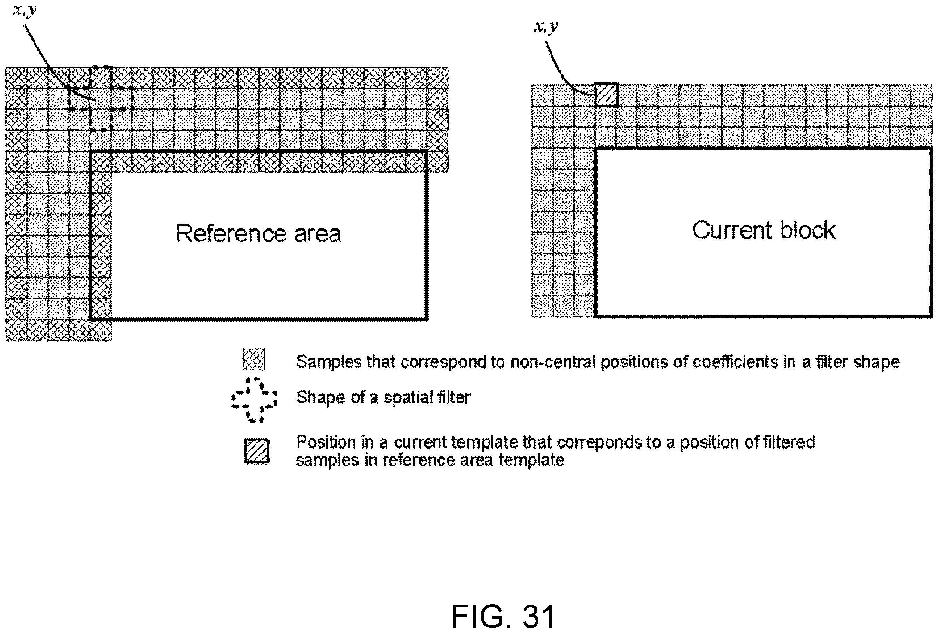

Reference Filtering for Inter-Prediction (RFIP)As proposed in an article by Alexey Filippov, entitled "Non-EE2: Reference filtering for inter-prediction," Joint Video Experts Team (JVET) of ITU-T SG 16 WP 3 and ISO/IEC JTC 1/SC 29 33rd Meeting, by teleconference, 17-26 January 2024, Document JVET-AG0194, when the LIC flag is indicated, an additional flag could be signalled to specify whether the RFIP method is applied or not. When the RFIP method is applied, reference samples of a block are not processed by LIC, but instead, a linear filter is applied to interpolated reference area to obtain predicted samples. Linear filter parameters are derived from template areas of current and reference blocks using spatially collocated samples as shown in FIG. 31. Linear filter parameters derivation is performed similarly to the filter parameter derivation in CCCM (see an article by M. Coban, et al., entitled "Algorithm description of Enhanced Compression Model 11 (ECM 11)", document JVET-AF2025, 32nd JVET Meeting, Hannover, DE, October 2023).

Several filters with different parameter sets could be applied within the reference area. Selection of filter is performed based on classification that is performed for template areas of the reference and current block.

The following classification steps are performed for a sample at position (x,y):

- Calculation of differences between neighboring samples in horizontal and vertical directions (delta_x and delta_y, respectively);
- Derivation of gradient based on tangent value estimated from delta_x and delta_y (similarly, as it is performed in DIMD histogram derivation), thus obtaining magnitude and angular parameter (which is expressed as one of the intra prediction directional modes)
- Comparing the magnitude with a threshold. Position (x,y) is associated with class 0 if the magnitude is less than a threshold.
- Obtaining the absolute difference of angular parameters calculated for collocated samples of templates of reference area and current block. If the difference is less than a threshold, position (x,y) is associated with class 1.

Derivation of filter parameters is performed separately for sample positions associated with class 0 and sample positions associated with class 1.

Filter parameter selection for a sample of the reference area is performed when the magnitude of the gradient in the filtered position is greater than a threshold determined for a block. The threshold for a magnitude is obtained from the range of gradient magnitudes within the reference area.

Filter parameters are different for different color components. After reference samples of a color plane are processed by a derived filter, they are clipped to the range that depends on the bit depth specified for the color component (e.g., [0,1023] for a bit depth of 10 bits).

A reference filtering flag is signalled in AMVP mode in dependence of a LIC flag. The method is not applied in AMVP-merge mode. When the LIC flag is on and the reference filter flag is off, samples of a reference block are processed by the LIC process. When the LIC flag is on and the reference filter flag is on, samples of a reference block are processed by the RFIP method. When the LIC flag is off, neither LIC nor the RFIP method is applied.

The method is also applied in the regular merge mode. Two cost values are calculated: C0 = dSAD(1) and C1 = dSAD(s). The dSAD metric is defined as follows:

$$dSAD(s) = \sum_{ij} |(\hat{p}_i - \hat{p}_j) - s \cdot (p_i - p_j)|$$

where $p_i$ and $p_j$ are neighboring template samples of a current block; $\hat{p}_i$ and $\hat{p}_j$ are neighboring template samples of a reference block, s denotes an estimated value of the scale parameter that is obtained by dividing the sum of differences in the current template by the sum of differences in the reference template:

$$s = \hat{\Delta}/\Delta,$$

where $\hat{\Delta} = \Sigma_{ij}(\hat{p}_i - \hat{p}_j)$ and $\Delta = \Sigma_{ij}(p_i - p_j)$

C0 is multiplied by $\alpha$ if the inherited LIC flag is false while C1 is multiplied by $\alpha$ if the inherited LIC flag is true, where $\alpha$ is a constant that can take values less than 1: $\alpha < 1$. For merge candidates that satisfy C0 > C1 criteria, the LIC flag is set to true.

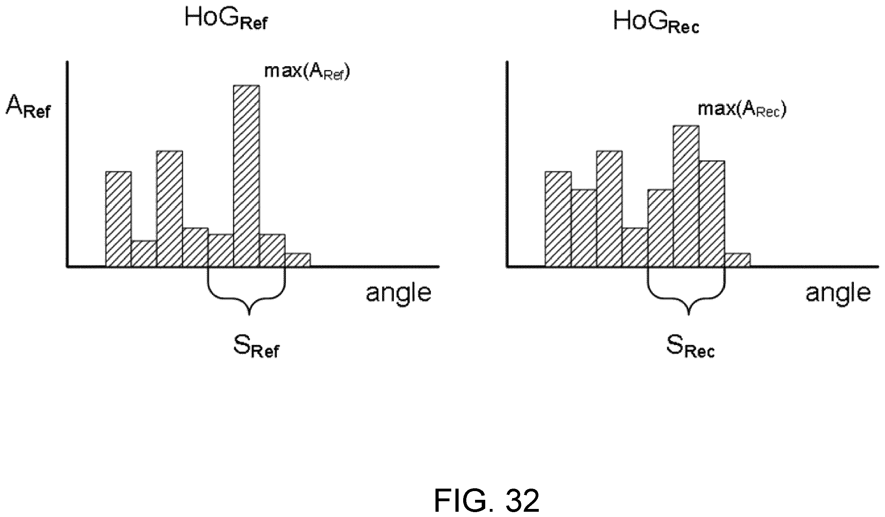

Then, histograms of gradients are calculated for the reference block template and for the current block template. The calculation of histograms of gradients is performed in a similar way as done in DIMD (see JVET-AF2025). The decision on whether reference filtering is applied is taken based on the difference of positions of maximums within histograms and estimation of amplitudes distribution near the maximum values as shown in FIG. 32.

If the difference between positions of maximums in HoGRef and HoGRec exceeds a threshold, the reference filtering is not applied. Otherwise, if SRef / SRec > TR or SRec / SRef > TR, a reference filtering is applied to a block, where SRef is an estimation of amplitude distribution of the histogram of gradient of reference block template near the maximum value (typically a ratio between maximum value and neighboring value in the histogram, SRec is the same estimation of amplitude distribution as SRef, but calculated on the histogram of gradient of current block template, and TR is a predefined threshold value.

We observe some lack of synergy arises in recent advances on prediction enhancements.

Namely, the LIC mechanism benefit from several improvements, in particular in terms of propagation of LIC models from previously coded CUs to a current CU, under the form of some merge mechanism for LIC, and non-local LIC mechanisms. On the contrary, there is no such propagation for the case of reference block filtering for inter prediction.

In this document, in order to further increase the compression efficiency of ECM, in particular by improving the design of the reference filtering process for temporal prediction, for example, as proposed in JVET-AG0194. To do so, several aspects are proposed.

- The support for adaptive top-only, left-only or top-left template area to compute temporal prediction enhancement parameters is extended to the case of reference sample convolutional filtering, e.g., of JVET-AG0194.
- The explicit signaling of the LIC flag for merge mode as proposed in JVET-AG0276 and adopted in ECM-12 is applied to convolution temporal filtering method, e.g., of JVET-AG0194
- The Non-Local approach of LIC as adopted in ECM-12.0 is extended and adapted to the case of reference convolutional filtering, e.g., of JVET-AG0194.
- The duplication of merge candidates with RFIP flag enabled is performed similarly to merge candidates with LIC flag on as proposed in JVET-AG0194. That is, RFIP filtering parameters are inherited in addition to merged motion information. Then, as for LIC in JVET-AG0195, the competition between RFIP on and off may take place based on similar SAD template cost comparison as is done in JVET-AG0194. Furthermore, retrieved duplicated merge candidates issued from CU with RFIP flag enabled are put in competition with other merge candidates in the ARMC process for reordering.

First proposed embodiment: adaptive template for RFIP parameters derivation

In this embodiment, we propose to adaptively select the type of template used for RFIP parameters computation, as is done for LIC for example.

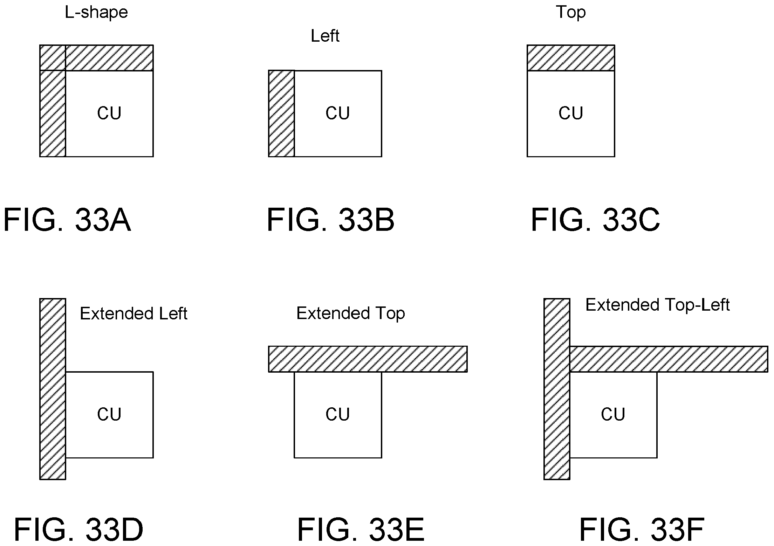

To do so, a template region may be signaled in the bit-stream between L-Shape, Left or Top region around the current CU, as shown in FIGs. 33A, 33B and 33C.

Thus, at the decoder side, the signaled template area is considered for the derivation of RFIP filter parameters. That is, reconstructed samples in the selected template region around the current block and around the reference block of the current block are considered to perform the CCCM-like determination of convolutional filter parameters.

According to a further variant, the possibility to use top-only or left-only template area may depend on the block size. For instance, if the block width is smaller than a given value, e.g., 8 or 16 luma samples, then the top-only template region may not be allowed. Conversely, if the block height is smaller than a given threshold, then the left-only template region may be disallowed.

Note that in another variant of this embodiment, the use of two filtering models for RFIP may be signaled as well. Indeed, in JVET-AG0194, samples in the L-Shape template area are classified in two classes according to a gradient-based analysis of the template areas.

The use of multiple RFIP models may also be chosen at the encoder side and signaled in the bit-stream.

According to a variant the multiple RFIP model approach may be allowed only in combination with the use of the L-Shape template region and may be disallowed when the top-only or left-only template area is used.

In another embodiment, the set of possible template regions to be used for RFIP model computation may be further extended, for example, to the Extended-Left, Extended-Top and Extended-Top-Left regions as illustrated in FIGs. 33D, 33E and 33F.

Second embodiment: explicit RFIP flag signaling in merge mode

In this embodiment, in merge mode, the usage of RFIP may be explicitly signalled as is the case for the LIC usage.

As described before, in ECM-12, in merge candidates, an opposite LIC flag is signaled in a merge coding unit, which indicates if the inherited LIC flag of the selected merge candidate used for deriving current CU's inter prediction data is used or not for the current CU.

That is, the initial LIC flag of a merge CU may be the LIC flag inherited from the merge candidate. Moreover, if the current CU has a template region available, the LIC flag may be derived according to a SAD/MRSAD template matching cost comparison as previously explained.

The flag thus indicates if the LIC flag of the current CU is the opposite of the initial inherited LIC flag value.

In the present embodiment, the usage of RFIP for a merge CU is determined depending on the explicit signaling of the LIC usage information.

FIG. 33 illustrates a decoder side RFIP flag derivation process for a merge CU, according to this embodiment. In particular, the LIC flag is first derived (3410) as proposed in JVET-AG0194, based on two SAD costs comparison. Then the received (3420) LIC flag indicates if final LIC flag takes the opposite value of SAD-based value or not. If the opposite LIC flag is set to true (3430), the final LIC flag is set (3440) to the opposite of the initially determined LIC flag. Otherwise, the final LIC flag is set to the initially determined LIC flag. Then, the usage of RFIP is determined (3460) based on the gradient-based analysis of JVET-AF0194, only if the final LIC flag is false (3450). If final LIC flag is true, the RFIP flag of current block is set (3470) to false. The process ends at step 3499.

According to a variant of the present embodiment, the received explicit LIC flag for a merge CU may have a different meaning. It may indicate that if one of the RFIP flag and the LIC flag is selected to be true at the decoder side, then the value of that flag is modified according to the received explicit flag.

Conversely, if both RFIP and LIC flag are determined as false by the SAD and gradient based methods at decoder side, the explicit flag received indicates if one of the two flags is to be set to true. In this last case, the selected prediction enhancement between LIC and RFIP may be equal to the enhancement method indicated by the merge candidate selected for the current CU. In another variant, the selection between LIC and RFIP is based on the gradient based analysis proposed in JVET-AG0194. Namely, this method is applied whatever the SAD cost-based selection of the LIC flag. If it determines the RFIP flag to be true, then final RFIP flag is true and final LIC flag is false. Otherwise, the final LIC flag is true and final RFIP flag is false.

In another variant of the proposed embodiment, an additional flag indicating if RFIP is to be applied is signaled. In this case, the LIC flag first explicitly signal the usage of LIC for each merge CU, and no SAD-based or TM-cost based is used to determine the LIC flag at the decoder side. Furthermore, if the signaled LIC flag is false, the RFIP flag is explicitly signed as well.

Third embodiment: Non-Local Reference Filtering for Inter Prediction

In this embodiment, the non-local LIC concept is extended to the case of RFIP. That is, as for LIC, additional merge candidates are constructed as follows for a given CU, when constructing the merge candidate list of the current CU. In additional to Non-local LIC candidates already computed in ECM, some non-local RFIP candidates (NRFIP) are also computed and added to the merge candidate list. This consists in considering neighboring and non-adjacent previous block positions as shown in FIG. 26. For each of the candidates, the RFIP model is computed so as to minimize the distortion between the predicted block for this candidate block and the reconstructed block for this candidate block. Note here the RFIP model is computed on the current block instead on the templates, so the model parameters can be more accurate. This leads to candidate RFIP models. These candidates then undergo a competition with other merge candidates and NLIC candidates through the ARMC based reordering of candidates.

In a variant, for each NLIC candidate, a choice is made between LIC and RFIP, in a similar way as the automatic choice proposed in JVET-AG0194. That is, the gradient-based analysis described in JVET-AG0194 may be applied between the predicted and the reconstructed adjacent or non-adjacent block. Therefore, the same number of potential merge candidate is generated as in ECM in this variant.

Fourth embodiment: propagate the RFIP parameters through the merge mechanism

In this embodiment, it is proposed to propagate RFIP filtering parameters from previously coded CUs towards the current CU through the merge candidate list.

To do so, similarly to what is proposed for LIC in JVET-AG0195, the RFIP model is inherited from adjacent, non-adjacent, HMVP merge candidates, etc. along with inherited motion information. Then, merge candidates having the RFIP flag equal to true are duplicated. The duplicated candidate are then put in competition with other candidates, through the ARMC reordering of merge candidates.

Furthermore, when a new merge candidate is retained through the ARMC process, then its RFIP model may not be recomputed. Instead, the inherited RFIP model parameters may be used during the temporal prediction of current CU.

Alternatively, for each merge candidate having the LIC flag or RFIP flag equal true, the SAD-based and gradient based methods proposed in JVET-AG0194 may be employed at the decoder to select one temporal prediction method between LIC, RFIP or none of them. If LIC or RFIP is selected, then the inherited parameters for selected LIC or RFIP may be used during temporal prediction enhancement.

Note that the proposed modified temporal prediction method may normatively be activated/deactivated, for example, by means of at least a dedicated sequence parameter set (SPS) signaling flag, a dedicated picture parameter set (PPS) signaling flag, a dedicated picture header syntax element, a dedicated slice header syntax element, a dedicated sub-picture level syntax element, and/or a dedicated CTU (coding tree unit) level syntax element.

Various methods are described herein, and each of the methods comprises one or more steps or actions for achieving the described method. Unless a specific order of steps or actions is required for proper operation of the method, the order and/or use of specific steps and/or actions may be modified or combined. Additionally, terms such as "first", "second", etc. may be used in various embodiments to modify an element, component, step, operation, etc., for example, a "first decoding" and a "second decoding". Use of such terms does not imply an ordering to the modified operations unless specifically required. So, in this example, the first decoding need not be performed before the second decoding, and may occur, for example, before, during, or in an overlapping time period with the second decoding.

Various methods and other aspects described in this application can be used to modify modules, for example, the motion estimation and motion compensation modules (270, 275, 375), of a video encoder 200 and decoder 300 as shown in FIG. 2 and FIG. 3. Moreover, the present aspects are not limited to ECM, VVC or HEVC, and can be applied, for example, to other standards and recommendations, and extensions of any such standards and recommendations. Unless indicated otherwise, or technically precluded, the aspects described in this application can be used individually or in combination.

Various numeric values are used in the present application. The specific values are for example purposes and the aspects described are not limited to these specific values.

Various implementations involve decoding. "Decoding," as used in this application, may encompass all or part of the processes performed, for example, on a received encoded sequence in order to produce a final output suitable for display. In various embodiments, such processes include one or more of the processes typically performed by a decoder, for example, entropy decoding, inverse quantization, inverse transformation, and differential decoding. Whether the phrase "decoding process" is intended to refer specifically to a subset of operations or generally to the broader decoding process will be clear based on the context of the specific descriptions and is believed to be well understood by those skilled in the art.

Various implementations involve encoding. In an analogous way to the above discussion about "decoding", "encoding" as used in this application may encompass all or part of the processes performed, for example, on an input video sequence in order to produce an encoded bitstream.

The implementations and aspects described herein may be implemented in, for example, a method or a process, an apparatus, a software program, a data stream, or a signal. Even if only discussed in the context of a single form of implementation (for example, discussed only as a method), the implementation of features discussed may also be implemented in other forms (for example, an apparatus or program). An apparatus may be implemented in, for example, appropriate hardware, software, and firmware. The methods may be implemented in, for example, an apparatus, for example, a processor, which refers to processing devices in general, including, for example, a computer, a microprocessor, an integrated circuit, or a programmable logic device. Processors also include communication devices, for example, computers, cell phones, portable/personal digital assistants ("PDAs"), and other devices that facilitate communication of information between end-users.

Reference to "one embodiment" or "an embodiment" or "one implementation" or "an implementation", as well as other variations thereof, means that a particular feature, structure, characteristic, and so forth described in connection with the embodiment is included in at least one embodiment. Thus, the appearances of the phrase "in one embodiment" or "in an embodiment" or "in one implementation" or "in an implementation", as well any other variations, appearing in various places throughout this application are not necessarily all referring to the same embodiment.

Additionally, this application may refer to "determining" various pieces of information. Determining the information may include one or more of, for example, estimating the information, calculating the information, predicting the information, or retrieving the information from memory.

Further, this application may refer to "accessing" various pieces of information. Accessing the information may include one or more of, for example, receiving the information, retrieving the information (for example, from memory), storing the information, moving the information, copying the information, calculating the information, determining the information, predicting the information, or estimating the information.

Additionally, this application may refer to "receiving" various pieces of information. Receiving is, as with "accessing", intended to be a broad term. Receiving the information may include one or more of, for example, accessing the information, or retrieving the information (for example, from memory). Further, "receiving" is typically involved, in one way or another, during operations, for example, storing the information, processing the information, transmitting the information, moving the information, copying the information, erasing the information, calculating the information, determining the information, predicting the information, or estimating the information.

It is to be appreciated that the use of any of the following "/", "and/or", and "at least one of', for example, in the cases of "A/B", "A and/or B" and "at least one of A and B", is intended to encompass the selection of the first listed option (A) only, or the selection of the second listed option (B) only, or the selection of both options (A and B). As a further example, in the cases of "A, B, and/or C" and "at least one of A, B, and C", such phrasing is intended to encompass the selection of the first listed option (A) only, or the selection of the second listed option (B) only, or the selection of the third listed option (C) only, or the selection of the first and the second listed options (A and B) only, or the selection of the first and third listed options (A and C) only, or the selection of the second and third listed options (B and C) only, or the selection of all three options (A and B and C). This may be extended, as is clear to one of ordinary skill in this and related arts, for as many items as are listed.

Also, as used herein, the word "signal" refers to, among other things, indicating something to a corresponding decoder. For example, in certain embodiments the encoder signals a quantization matrix for de-quantization. In this way, in an embodiment the same parameter is used at both the encoder side and the decoder side. Thus, for example, an encoder can transmit (explicit signaling) a particular parameter to the decoder so that the decoder can use the same particular parameter. Conversely, if the decoder already has the particular parameter as well as others, then signaling can be used without transmitting (implicit signaling) to simply allow the decoder to know and select the particular parameter. By avoiding transmission of any actual functions, a bit savings is realized in various embodiments. It is to be appreciated that signaling can be accomplished in a variety of ways. For example, one or more syntax elements, flags, and so forth are used to signal information to a corresponding decoder in various embodiments. While the preceding relates to the verb form of the word "signal", the word "signal" can also be used herein as a noun.

As will be evident to one of ordinary skill in the art, implementations may produce a variety of signals formatted to carry information that may be, for example, stored or transmitted. The information may include, for example, instructions for performing a method, or data produced by one of the described implementations. For example, a signal may be formatted to carry the bitstream of a described embodiment. Such a signal may be formatted, for example, as an electromagnetic wave (for example, using a radio frequency portion of spectrum) or as a baseband signal. The formatting may include, for example, encoding a data stream and modulating a carrier with the encoded data stream. The information that the signal carries may be, for example, analog or digital information. The signal may be transmitted over a variety of different wired or wireless links, as is known. The signal may be stored on a processor-readable medium.

## Claims

1. A method of video decoding, comprising:

   obtaining a reference block in a reference picture for a block in a picture, wherein said block is decoded in a merge mode, and wherein a non-adjacent neighboring block is included as a candidate in a merge candidate list for said block;
   obtaining one or more filter parameters for reference convolutional filtering for said block based on said merge candidate list;
   applying said one or more filter parameters to said reference block;
   obtaining a prediction block for said block based on said filtered reference block; and
   decoding said block based on said prediction block for said block.

2. A method of video encoding, comprising:

   obtaining a reference block in a reference picture for a block in a picture, wherein said block is encoded in a merge mode, and wherein a non-adjacent neighboring block is included as a candidate in a merge candidate list for said block;
   obtaining one or more filter parameters for reference convolutional filtering for said block based on said merge candidate list;
   applying said one or more filter parameters to said reference block based on said merge candidate list;
   obtaining a prediction block for said block based on said filtered reference block; and
   encoding said block based on said prediction block for said block.

3. An apparatus for video decoding, comprising one or more processors and at least one memory coupled to said one or more processors, wherein said one or more processors are configured to:

   obtaining a reference block in a reference picture for a block in a picture, wherein said block is decoded in a merge mode, and wherein a non-adjacent neighboring block is included as a candidate in a merge candidate list for said block;
obtain one or more filter parameters for reference convolutional filtering for said block based on said merge candidate list;
apply said one or more filter parameters to said reference block;
obtain a prediction block for said block based on said filtered reference block; and
decode said block based on said prediction block for said block.

4. An apparatus for video encoding, comprising one or more processors and at least one memory coupled to said one or more processors, wherein said one or more processors are configured to:

obtain a reference block in a reference picture for a block in a picture, wherein said block is encoded in a merge mode, and wherein a non-adjacent neighboring block is included as a candidate in a merge candidate list for said block;
obtain one or more filter parameters for reference convolutional filtering for said block based on said merge candidate list;
apply said one or more filter parameters to said reference block;
obtain a prediction block for said block based on said filtered reference block; and
encode said block based on said prediction block for said block.

5. The method of claim 1 or 2, or the apparatus of claim 3 or 4, wherein said one or more filter parameters are inherited from a candidate in said merge candidate list.

6. The method of any one of claims 1, 2 and 5, further comprising, or the apparatus of any one of claims 3-5, wherein said one or more processors are further configured to perform:
obtaining, for each candidate in said merge candidate list, a set of filter parameters based on a predicted block for said candidate and a reconstructed block for said candidate, wherein a corresponding set of filter parameters of a selected candidate from said merge candidate list is inherited as said one or more filter parameters for said block.

7. The method of any one of claims 1, 2, 5 and 6, or the apparatus of any one of claims 3-6, wherein said merge candidate list further includes an adjacent neighboring block.

8. The method of any one of claims 1, 2 and 5-7, or the apparatus of any one of claims 3-7, wherein said merge candidate list further includes a history-based candidate.

9. A method of video decoding, comprising:

obtaining a reference block in a reference picture for a block in a picture;
obtaining a first template based on decoded samples in said picture;
obtaining a second template based on decoded samples in said reference picture;
determining that reference convolutional filtering is used for inter prediction for said block, responsive to that local illumination compensation is off for said block;
obtaining one or more filter parameters for reference convolutional filtering based on said first template and said second template;
applying said one or more filter parameters to said reference block;
obtaining a prediction block for said block based on said filtered reference block; and
decoding said block based on said prediction block for said block.

10. A method of video encoding, comprising:

obtaining a reference block in a reference picture for a block in a picture;
obtaining a first template based on reconstructed samples in said picture;
obtaining a second template based on reconstructed samples in said reference picture;
determining that reference convolutional filtering is used for inter prediction for said block, responsive to that local illumination compensation is off for said block;
obtaining one or more filter parameters for reference convolutional filtering based on said first template and said second template;
applying said one or more filter parameters to said reference block;

obtaining a prediction block for said block based on said filtered reference block; and
encoding said block based on said prediction block for said block.

11. An apparatus for video decoding, comprising one or more processors and at least one memory coupled to said one or more processors, wherein said one or more processors are configured to:

obtain a reference block in a reference picture for a block in a picture;
obtain a first template based on decoded samples in said picture;
obtain a second template based on decoded samples in said reference picture;
determine that reference convolutional filtering is used for inter prediction for said block, responsive to that local illumination compensation is off for said block;
obtain one or more filter parameters for reference convolutional filtering based on said first template and said second template;
apply said one or more filter parameters to said reference block;
obtain a prediction block for said block based on said filtered reference block; and
decode said block based on said prediction block for said block.

12. An apparatus for video encoding, comprising one or more processors and at least one memory coupled to said one or more processors, wherein said one or more processors are configured to:

obtain a reference block in a reference picture for a block in a picture;
obtain a first template based on reconstructed samples in said picture;
obtain a second template based on reconstructed samples in said reference picture;
determine that reference convolutional filtering is used for inter prediction for said block, responsive to that local illumination compensation is off for said block;
obtain one or more filter parameters for reference convolutional filtering based on said first template and said second template;
apply said one or more filter parameters to said reference block;
obtain a prediction block for said block based on said filtered reference block; and
encode said block based on said prediction block for said block.

13. The method of claim 9 or 10, or the apparatus of claim 11 or 12, wherein said local illumination compensation is turned off based on an explicit flag.

14. The method of claim 13, or the apparatus of claim 13, wherein said explicit flag for local illumination compensation indicates whether a decoder side derived flag for local illumination compensation is reversed or not.

15. A signal comprising video data, formed by performing the method of any one of claims 2-8 and 10-14.

FIG. 1

EP 4 629 626 A1

FIG. 2

FIG. 3

FIG. 4

FIG. 5

2Nx2N NxN 2NxN Nx2N

nLx2N nRx2N 2NxnU 2NxnD

FIG. 6

FIG. 7

SPLIT_BT_VER      SPLIT_BT_HOR      SPLIT_TT_VER      SPLIT_TT_HOR

# FIG. 8

CU_Skip ?

yes            no

Merge_idx

Merge-SKIP

From merge_idx:
- predType (P/B)
- ref_idx(es)
- MV(s)

Merge_flag

Merge_flag ?

yes        no

Merge_idx

Merge (non-skip)

From merge_idx:
- predType (P/B)
- ref_idx(es)
- MV(s)

B slice ?

yes     INTER     no

Decode
- 2 ref_idx
- 2 MVD
- 2 MV idx

AMVP-B

Decode
- 1 ref_idx
- 1 MVD
- 1 MV idx

AMVP-P

# FIG. 9

FIG. 10

Initial candidates derivation

Up to one spatial candidate derivation from above blocks

Up to one spatial candidate derivation from left blocks

Redundancy check for spatial candidates

Temporal candidate derivation

Additional candidate derivation

Insertion of zero motion candidates

Final AMVP candidates list

FIG. 11

FIG. 12

Spatial candidate positions (5)

Select max. 4 candidates
(remove duplicated candidates)

Temporal candidate positions (2)

Partition redundancy removal
(e.g., avoid virtual 2Nx2N partition by merging 2 2NxN)

Select max. 1 candidates

Add combined bi-predictive candidates for B slices

Add zero merge candidates

Final merge candidates (maximum number is equal to MaxNumMergeCand)

FIG. 13

FIG. 14

FIG. 15

EP 4 629 626 A1

FIG. 16

EP 4 629 626 A1

FIG. 17

FIG. 18

FIG. 19

FIG. 20

FIG. 21

FIG. 22

FIG. 23

FIG. 24

FIG. 25

FIG. 26

FIG. 27

FIG. 28

FIG. 29

FIG. 30

Samples that correspond to non-central positions of coefficients in a filter shape

Shape of a spatial filter

Position in a current template that correponds to a position of filtered samples in reference area template

FIG. 31

EP 4 629 626 A1

FIG. 32

EP 4 629 626 A1

FIG. 33A

FIG. 33B

FIG. 33C

FIG. 33D

FIG. 33E

FIG. 33F

FIG. 34

| | Europäisches Patentamt European Patent Office Office européen des brevets | **EUROPEAN SEARCH REPORT** | **Application Number** EP 24 30 5518 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 11 924 407 B2 (HUAWEI TECH CO LTD [CN]) 5 March 2024 (2024-03-05) | 1-5,7,8, 15 | INV. H04N19/117 H04N19/52 H04N19/82 |
| Y | * abstract * * section "Technical field" * * column 2, line 7 - line 48 * * column 4, line 23 - line 65 * * column 6, line 38 - column 7, line 37 * * column 8, line 1 - line 18 * * column 23, line 20 - line 38 * * column 28, line 11 - line 61 * * column 29, line 48 - line 50 * * column 33, line 26 - line 43 * * column 35, line 1 - line 25 * * column 36, line 61 - column 37, line 37 * * column 39, line 49 - line 52 * * column 53, line 31 - line 53 * ----- | 6 | |
| Y | XIU (KWAI) X ET AL: "Non-EE2: Enhancements on local illumination compensation", 32. JVET MEETING; 20231013 - 20231020; HANNOVER; (THE JOINT VIDEO EXPLORATION TEAM OF ISO/IEC JTC1/SC29/WG11 AND ITU-T SG.16 ), , no. JVET-AF0191 14 October 2023 (2023-10-14), XP030312369, Retrieved from the Internet: URL:https://jvet-experts.org/doc_end_user/documents/32_Hannover/wg11/JVET-AF0191-v2.zip JVET-AF0191_r1.docx [retrieved on 2023-10-14] * abstract * * section 2 * ----- -/-- | 6 | **TECHNICAL FIELDS SEARCHED (IPC)** H04N |

The present search report has been drawn up for all claims

| Place of search | Date of completion of the search | Examiner |
|---|---|---|
| The Hague | 26 September 2024 | La, Valérie |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

**EUROPEAN SEARCH REPORT**

**Application Number**

EP 24 30 5518

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A,D | FILIPPOV (OFINNO) A ET AL: "Non-EE2: Reference filtering for inter-prediction", 33. JVET MEETING; 20240117 - 20240126; TELECONFERENCE; (THE JOINT VIDEO EXPLORATION TEAM OF ISO/IEC JTC1/SC29/WG11 AND ITU-T SG.16 ), , no. JVET-AG0194 19 January 2024 (2024-01-19), XP030314184, Retrieved from the Internet: URL:https://jvet-experts.org/doc_end_user/ documents/33_Teleconference/wg11/JVET-AG01 94-v2.zip JVET-AG0194-v2.docx [retrieved on 2024-01-19] * abstract * * section 2 * | 1-8,15 | |
| A | FILIPPOV (OFINNO) A ET AL: "Non-EE2: LIC extensions", 31. JVET MEETING; 20230711 - 20230719; GENEVA; (THE JOINT VIDEO EXPLORATION TEAM OF ISO/IEC JTC1/SC29/WG11 AND ITU-T SG.16 ), , no. JVET-AE0140 13 July 2023 (2023-07-13), XP030311424, Retrieved from the Internet: URL:https://jvet-experts.org/doc_end_user/ documents/31_Geneva/wg11/JVET-AE0140-v2.zi p JVET-AE0140-v2.docx [retrieved on 2023-07-13] * section 2 * | 1-8,15 | TECHNICAL FIELDS SEARCHED (IPC) |

-/--

The present search report has been drawn up for all claims

| Place of search | Date of completion of the search | Examiner |
|---|---|---|
| The Hague | 26 September 2024 | La, Valérie |

Europäisches
Patentamt

European
Patent Office

Office européen
des brevets

# EUROPEAN SEARCH REPORT

**Application Number**

EP 24 30 5518

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | COBAN M ET AL: "Algorithm description of Enhanced Compression Model 12 (ECM 12)", 33. JVET MEETING; 20240117 - 20240126; TELECONFERENCE; (THE JOINT VIDEO EXPLORATION TEAM OF ISO/IEC JTC1/SC29/WG11 AND ITU-T SG.16 ), , no. JVET-AG2025 ; m66954 29 March 2024 (2024-03-29), XP030316747, Retrieved from the Internet: URL:https://jvet-experts.org/doc_end_user/ documents/33_Teleconference/wg11/JVET-AG20 25-v1.zip JVET-AG2025-v1.docx [retrieved on 2024-03-29] * sections 3.2.1 and 3.2.2 on pages 28-30 * ----- | 1-8,15 | |
| A | C-C CHEN (QUALCOMM) ET AL: "Non-EE2: LIC model parameter inheritance for merge modes", 33. JVET MEETING; 20240117 - 20240126; TELECONFERENCE; (THE JOINT VIDEO EXPLORATION TEAM OF ISO/IEC JTC1/SC29/WG11 AND ITU-T SG.16 ), , no. JVET-AG0195 19 January 2024 (2024-01-19), XP030314187, Retrieved from the Internet: URL:https://jvet-experts.org/doc_end_user/ documents/33_Teleconference/wg11/JVET-AG01 95-v2.zip JVET-AG00195-v2.docx [retrieved on 2024-01-19] * abstract * * section 2 * ----- | 1-8,15 | TECHNICAL FIELDS SEARCHED (IPC) |

The present search report has been drawn up for all claims

| Place of search | Date of completion of the search | Examiner |
|---|---|---|
| The Hague | 26 September 2024 | La, Valérie |

EPO FORM 1503 03.82 (P04C01)

Europäisches
Patentamt

European
Patent Office

Office européen
des brevets

**Application Number**

EP 24 30 5518

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

## LACK OF UNITY OF INVENTION

The Search Division considers that the present European patent application does not comply with the requirements of unity of invention and relates to several inventions or groups of inventions, namely:

see sheet B

☐ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☒ None of the further search fees have been paid within the fixed time limit. The present European search report has been drawn up for those parts of the European patent application which relate to the invention first mentioned in the claims, namely claims:

1-8, 15

☐ The present supplementary European search report has been drawn up for those parts of the European patent application which relate to the invention first mentioned in the claims (Rule 164 (1) EPC).

Europäisches
Patentamt
European
Patent Office
Office européen
des brevets

**LACK OF UNITY OF INVENTION**
**SHEET B**

The Search Division considers that the present European patent application does not comply with the requirements of unity of invention and relates to several inventions or groups of inventions, namely:

1. claims: 1-8, 15

A method of video decoding, comprising:
obtaining a reference block in a reference picture for a block in a picture, wherein said block is decoded in a merge mode, and wherein a non-adjacent neighboring block is included as a candidate in a merge candidate list for said block;
obtaining one or more filter parameters for reference convolutional filtering for said block based on said merge candidate list;
applying said one or more filter parameters to said reference block;
obtaining a prediction block for said block based on said filtered reference block; and
decoding said block based on said prediction block for said block.

- - -

2. claims: 9-14

A method of video decoding, comprising:
obtaining a reference block in a reference picture for a block in a picture;
obtaining a first template based on decoded samples in said picture;
obtaining a second template based on decoded samples in said reference picture;
determining that reference convolutional filtering is used for inter prediction for said block, responsive to that local illumination compensation is off for said block;
obtaining one or more filter parameters for reference convolutional filtering based on said first template and said second template;
applying said one or more filter parameters to said reference block;
obtaining a prediction block for said block based on said filtered reference block; and
decoding said block based on said prediction block for said block.

- - -

## ANNEX TO THE EUROPEAN SEARCH REPORT
## ON EUROPEAN PATENT APPLICATION NO.

EP 24 30 5518

This annex lists the patent family members relating to the patent documents cited in the above-mentioned European search report.
The members are as contained in the European Patent Office EDP file on
The European Patent Office is in no way liable for these particulars which are merely given for the purpose of information.

26-09-2024

| Patent document cited in search report | Publication date | Patent family member(s) | Publication date |
|---|---|---|---|
| US 11924407 B2 | 05-03-2024 | AU 2020258987 A1 | 11-11-2021 |
| | | BR 112021020984 A2 | 21-12-2021 |
| | | CA 3137388 A1 | 22-10-2020 |
| | | CL 2021002721 A1 | 01-07-2022 |
| | | CN 113711601 A | 26-11-2021 |
| | | EP 3954122 A1 | 16-02-2022 |
| | | JP 7346589 B2 | 19-09-2023 |
| | | JP 2022529705 A | 23-06-2022 |
| | | JP 2023169226 A | 29-11-2023 |
| | | KR 20210149850 A | 09-12-2021 |
| | | US 2022038686 A1 | 03-02-2022 |
| | | US 2024244181 A1 | 18-07-2024 |
| | | WO 2020211870 A1 | 22-10-2020 |
| | | ZA 202301008 B | 25-09-2024 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **ZHI ZHANG et al.** Non-EE2: Affine subblock BDOF refinement. *Joint Video Experts Team (JVET) of ITU-T SG 16 WP 3 and ISO/IEC JTC 1/SC 29 31st Meeting*, 11 July 2023
- **VADIM SEREGIN et al.** CE4-3.1a and CE4-3.1b: Unidirectional local illumination compensation with affine prediction. *Joint Video Experts Team (JVET) of ITU-T SG 16 WP 3 and ISO/IEC JTC 1/SC 29/WG 11 15th Meeting: Gothenburg*, 03 July 2019
- **YANG WANG**. EE2 Test 2.6g, 2.6h, 2.6i, 2.6j: Combination of tests on LIC improvement. *Joint Video Experts Team (JVET) of ITU-T SG 16 WP 3 and ISO/IEC JTC 1/SC 29 33rd Meeting*, 17 January 2024

- **CHUN-CHI CHEN et al.** Non-EE2: LIC model parameter inheritance for merge modes. *Joint Video Experts Team (JVET) of ITU-T SG 16 WP 3 and ISO/IEC JTC 1/SC 29 33rd Meeting*, 17 January 2024
- **ALEXEY FILIPPOV**. Non-EE2: Reference filtering for inter-prediction. *Joint Video Experts Team (JVET) of ITU-T SG 16 WP 3 and ISO/IEC JTC 1/SC 29 33rd Meeting*, 17 January 2024
- **M. COBAN et al.** Algorithm description of Enhanced Compression Model 11 (ECM 11). *JVET-AF2025, 32nd JVET Meeting*, October 2023